(19) **Europäisches Patentamt / European Patent Office / Office européen des brevets**

(11) **EP 4 554 822 B1**

(12) **EUROPEAN PATENT SPECIFICATION**

(45) Date of publication and mention
of the grant of the patent:
**01.07.2026 Bulletin 2026/27**

(21) Application number: **22744759.6**

(22) Date of filing: **15.07.2022**

(51) International Patent Classification (IPC):
**B60T 8/17** *(2006.01)*   **B60T 8/1755** *(2006.01)*
**B60T 8/24** *(2006.01)*   **B60W 40/103** *(2012.01)*
**B60W 40/114** *(2012.01)*

(52) Cooperative Patent Classification (CPC):
**B60T 8/1708; B60T 8/17551; B60T 8/248;
B60W 40/103; B60W 40/114;** B60T 2230/02;
B60T 2230/06; B60W 2300/14; B60W 2300/145

(86) International application number:
**PCT/EP2022/069962**

(87) International publication number:
**WO 2024/012706 (18.01.2024 Gazette 2024/03)**

(54) **DETECTION OF YAW INSTABILITIES IN VEHICLE COMBINATIONS**

DETEKTION VON GIERINSTABILITÄTEN BEI FAHRZEUGKOMBINATIONEN

DÉTECTION D'INSTABILITÉS DE LACET DANS DES COMBINAISONS DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.05.2025 Bulletin 2025/21**

(73) Proprietor: **VOLVO TRUCK CORPORATION
405 08 Göteborg (SE)**

(72) Inventors:
• **ERDINC, Umur
413 26 Göteborg (SE)**
• **JONASSON, Mats
433 49 Partille (SE)**
• **JACOBSON, Bengt
435 38 Mölnlycke (SE)**

(74) Representative: **Ström & Gulliksson AB
P.O. Box 4188
203 13 Malmö (SE)**

(56) References cited:
WO-A1-2013/066216   DE-A1- 19 814 889
US-A1- 2013 085 649   US-A1- 2021 261 104

• ZANCHETTA M ET AL: "On the feedback control
of hitch angle through torque-vectoring", 2018
IEEE 15TH INTERNATIONAL WORKSHOP ON
ADVANCED MOTION CONTROL (AMC), IEEE, 9
March 2018 (2018-03-09), pages 535 - 540,
XP033353152, DOI: 10.1109/AMC.2019.8371150

**Description**

FIELD

This disclosure relates to detection of unsafe operation in vehicle combinations. In particular, it relates to detection of yaw instabilities for combinations of at least two vehicle units.

BACKGROUND

Multi-unit vehicle combinations are prone to different modes of unsafe operation including jack-knifing, trailer swing, rollover and off-tracking. Two of these, jack-knifing and trailer swing, can be grouped under the umbrella of yaw instabilities, as they are predominantly embodied in the yaw behaviour of the tractor and trailing units of a vehicle combination.

Jack-knifing occurs when the tractor unit of a vehicle combination starts to skid sideways in slippery road conditions and the driver is not able to correct the skidding in time with the proper amount of steering. The trailer unit pushes the tractor unit causing the tractor unit to turn around a vertical axis until it hits the trailing unit. Jack-knifing is one of the major sources of accidents in multi-unit vehicle combinations. Trailer swing occurs when the wheels of the trailing unit slip, for example due to slippery road conditions, while the wheels of the tractor unit do not. In this case, the trailing unit starts to swing around the vertical axis. All types of vehicle combinations are susceptible to such instabilities.

These instabilities can be exacerbated by the presence of propulsive elements, for example motors or braking systems, on the trailing unit. Such elements are used increasingly as electric vehicles become more popular. For example, electric motors may be present on some or all axles of the different units. In some instances, a controller of such a vehicle may activate the electric motors of only one axle or unit in order to propel the vehicle. For example, the controller may activate only the electric motors of a trailing unit if the battery of the tractor unit is emptier or if the tractor unit is a conventional tractor unit and the trailing unit is an electric trailer. Electric axles may also be used to capture energy via regenerative braking. A controller may cause only one axle or unit to perform regenerative braking without braking the other axles or units, for example if the battery of one unit is much emptier than the battery of another unit.

Propelling or braking with only one axle or unit may create the conditions for yaw instabilities more readily than conventional ways of propelling and braking. To avoid such situations, it is important to detect such yaw instabilities either in advance or at an early point of onset. In particular, it may be desired to use different approaches to detecting yaw instabilities to provide an accurate determination of an upcoming or ongoing yaw instability.

"On the Feedback Control of Hitch Angle through Torque-Vectoring" by M. Zanchetta et al, IEEE 15th International Workshop on Advanced Motion Control, 9 March 2018, pages 535-540, describes a torque-vectoring (TV) algorithm for the control of the hitch angle of an articulated vehicle. The hitch angle control function prevents trailer oscillations and instability during extreme cornering manoeuvres. The proposed control variable is a weighted combination of terms accounting for the yaw rate, sideslip angle and hitch angle of the articulated vehicle.

SUMMARY

This disclosure attempts to solve the problems noted above by providing a method in which various parameters of a vehicle combination are monitored to determine if it is operating in a safe manner. In particular, a plurality of probability values representing the probability of a yaw instability, for example jack-knifing or trailer swing, can be determined based on a respective parameter. The probability values can be weighted and combined to provide a combined probability value representing the probability of a yaw instability occurring in the vehicle combination.

This allows the advantages of different methods of instability detection to be leveraged. Different parameters can be monitored to detect a yaw instability, which provides a more reliable detection that relying solely on a single parameter. Furthermore, the probability of instability based on the different parameters can be weighted to tailor the method for a particular scenario. For example, if a high accuracy prediction is desired, the probability values based on parameters having a high detection accuracy can be weighed more highly.

According to an aspect, there is provided a method for detecting a yaw instability in a vehicle combination comprising a tractor unit and at least one trailing unit, the method comprising determining a plurality of probability values each representing the probability of a yaw instability for the vehicle combination, wherein each probability value is based on a reference value and a current value of a respective parameter, applying a respective weight to each probability value, and determining a combined probability value representing the probability of a yaw instability occurring in the vehicle combination based on the weighted probability values.

Optionally, each probability value is determined based on a difference between the reference value and the current value. Optionally, the plurality of parameters comprises at least one of a yaw rate of the tractor unit and/or the at least one trailing unit, an articulation angle and/or an articulation angular rate of consecutive units, a longitudinal wheel slip of the tractor unit and/or the at least one trailing unit, a sideslip angle of the tractor unit and/or the at least one trailing unit, and an understeering gradient of the tractor unit and/or the at least one trailing unit.

Optionally, the reference value, $\omega_{1,ref}$, for the yaw rate of the tractor unit is a modelled value, $\omega_{1,model}$, given by:

$$\omega_{1,model} = \frac{v_{1r} \tan \delta_1}{L_1}$$

where $v_{1r}$ is the longitudinal speed of the tractor unit, $\delta$ is the road wheel angle of the tractor unit, and $L_1$ is the wheelbase of the tractor unit.

Optionally, the reference value, $\omega_{2,ref}$, for the yaw rate of a first trailing unit is a modelled value, $\omega_{2,model}$, given by:

$$\omega_{2,model} = \frac{v_{1r}}{L_2} \left( \sin \theta_{1,2} + \cos \theta_{1,2} \cdot \frac{b_1 \cdot \tan \delta_1}{L_1} \right)$$

where $L_2$ is the wheelbase of the trailing unit, $\theta_{1,2}$ is the an articulation angle between the tractor unit and a first trailing unit, $b_1$ is the distance from the rear axle of the tractor unit to a coupling point of the vehicle combination, and $\delta_1$ is the road wheel angle of the tractor unit.

Optionally, the reference value for the yaw rate of trailing units $i>2$, $\omega_{i,model}$, can be given by:

$$\omega_i = \frac{v_{ir} \cdot \tan(\theta_{i-1,i} + \beta_{i-1,c})}{L_i}$$

where $\beta_{i-1,c}$ is the sideslip angle for unit $i$-$1$ at the coupling point.

Optionally, the reference value, $\theta_{1,2,ref}$, for the articulation angle between a tractor unit and a first trailing unit is a modelled value, $\theta_{1,2,ss,model}$, given by:

$$\theta_{1,2,ss,model} = \frac{L_2}{L_1} \left( 1 - \frac{b_1}{L_2} \right) \tan \delta_1$$

Optionally, the reference value, $\dot{\theta}_{1,2,ref}$, for the articulation angular rate between a tractor unit and a first trailing unit is a modelled value, $\dot{\theta}_{1,2,model}$, given by:

$$\dot{\theta}_{1,2,model} = -\frac{v_{1r}}{L_2} \sin \theta_{1,2} + \frac{v_{1r}}{L_1} \left( 1 - \frac{b_1}{L_2} \cos \theta_{1,2} \right) \tan \delta_1$$

Optionally, the reference value for the articulation angular rate between consecutive trailing units $i$, $i+1$, $\dot{\theta}_{i,i+1,model}$, can be given by:

$$\dot{\theta}_{i,i+1,model} = \omega_i - \omega_{i+1}$$

Optionally, the reference value, $S_{xi,ref}$, for the longitudinal slip of a wheel of a unit, $i$, is a fixed threshold determined based on the slip ratio of the wheel at a maximum tyre force or a variable threshold determined based on the inverse of a current value of a lateral acceleration of the tractor unit, a road wheel angle of the tractor unit, a road wheel angle of a trailing unit, and/or an articulation angle of consecutive units.

Optionally, the reference value, $\beta_{1,ref}$, for the sideslip angle for a given unit is a steady state value of the sideslip angle, preferably determined before braking.

Optionally, the reference value, $K_{us,i,ref}$, for the understeering gradient of a unit, $i$, is a fixed threshold determined based on experimental data and/or a machine learning model or a variable threshold determined based on a current operating state of the vehicle combination.

Optionally, the weights are determined based on a certainty of the respective probability value. Optionally, the weights are determined based on the horizon of detection associated with the probability value. Optionally, the weights are determined based on at least one of a vehicle parameter such as lateral acceleration, a static load distribution of the vehicle combination, and a longitudinal wheel slip of the tractor unit and/or the at least one trailing unit, and an environmental parameter such as road friction, road camber, and road slope. Optionally, the weights are determined based on a machine learning model or experimental data.

Optionally, the combined probability value, J, for a yaw instability of a unit, i, is given by:

$$J = W_1 \cdot \left(\beta_i - \beta_{i,ref}\right)^2 + W_2 \cdot \sum_i \left(S_{xi,k} - S_{xi,ref}\right)^2 + W_3 \cdot \left(\omega_i - \omega_{i,ref}\right)^2 +$$

$$W_4 \cdot \left(\theta_{i,i+1} - \theta_{i,i+1,ref}\right)^2 + W_5 \cdot \left(\dot{\theta}_{i,i+1} - \dot{\theta}_{i,i+1,ref}\right)^2$$

$$+ W_6 \left(\min\left(\left(K_{us,i} - K_{us,i,ref}\right), 0\right)\right)^2$$

where $W_j$ is the weight for the parameter model $j$, $\omega_i$ is a current value of the yaw rate of the unit, $\theta$ is a current value of the articulation angle of consecutive units, $\dot{\theta}$ is a current value of the articulation angular rate of consecutive units, $\beta_i$ is a current value of the sideslip angle for the unit, $S_{xi,k}$ is a current value of the longitudinal slip for the wheel $k$ of the unit, and $K_{us,i}$ is a current value is the understeering gradient for the unit.

Optionally, the method comprises determining a probability value for jack-knifing based on a plurality of parameters from the tractor unit. Optionally, the combined probability value for jack-knifing, $J_{jn}$, is given by:

$$J_{jn} = W_1 \cdot \left(\beta_1 - \beta_{1,ref}\right)^2 + W_2 \cdot \Sigma_i \left(S_{x1,k} - S_{x1,ref}\right)^2 + W_3 \cdot \left(\omega_1 - \omega_{1,ref}\right)^2 + W_4 \cdot$$

$$\left(\theta_{1,2,} - \theta_{1,2,ref}\right)^2 + W_5 \cdot \left(\dot{\theta}_{1,2} - \dot{\theta}_{1,2,ref}\right)^2 + W_6 \left(\min\left(\left(K_{us,1} - K_{us,1,ref}\right), 0\right)\right)^2$$

Optionally, the method comprises determining a probability value for trailer swing based on a plurality of parameters from a trailing unit. Optionally, the combined probability value for trailer swing, $J_{ts}$, is given by:

$$J_{ts} = W_1 \cdot \left(\beta_2 - \beta_{2,ref}\right)^2 + W_2 \cdot \Sigma_i \left(S_{x2,k} - S_{x2,ref}\right)^2 + W_3 \cdot \left(\omega_2 - \omega_{2,ref}\right)^2 + W_4 \cdot$$

$$\left(\theta_{1,2} - \theta_{1,2,ref}\right)^2 + W_5 \cdot \left(\dot{\theta}_{1,2} - \dot{\theta}_{1,2,ref}\right)^2 + W_6 \left(\min\left(\left(K_{us,2} - K_{us,2,ref}\right), 0\right)\right)^2$$

Optionally, the method comprises determining a probability value for complete spin out based on a plurality of parameters from the tractor unit and the at least one trailing unit. Optionally, the combined probability value for complete spin out, $J_{cso}$, is given by:

$$J_{cso} = W_{11} \cdot \left(\beta_1 - \beta_{1,ref}\right)^2 + W_{12} \cdot \left(\beta_2 - \beta_{2,ref}\right)^2 + W_{21} \cdot \Sigma_i \left(S_{x1,k} - S_{x1,ref}\right)^2 +$$

$$W_{22} \cdot \Sigma_i \left(S_{x2,k} - S_{x2,ref}\right)^2 + W_{31} \cdot \left(\omega_1 - \omega_{1,ref}\right)^2 + W_{32} \cdot \left(\omega_2 - \omega_{2,ref}\right)^2 + W_4 \cdot$$

$$\left(\theta_{1,2} - \theta_{1,2,ref}\right)^2 + W_5 \cdot \left(\dot{\theta}_{1,2} - \dot{\theta}_{1,2,ref}\right)^2 + W_{61} \left(\min\left(\left(K_{us,1} - K_{us,1,ref}\right), 0\right)\right)^2 +$$

$$W_{62} \left(\min\left(\left(K_{us,2} - K_{us,2,ref}\right), 0\right)\right)^2$$

According to an aspect, there is provided a computer-readable medium having stored thereon instructions that, when executed by one or more processors cause execution of the method steps.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. Further features of, and advantages with, the present invention will become apparent when studying the appended claims and the following description. The skilled person realizes that modifications are possible without departing from the scope of the present invention, as defined by the appended claims.

BRIEF DESCRIPTION OF THE DRAWINGS

Exemplary embodiments of the disclosure shall now be described with reference to the drawings in which:

FIG. 1 shows an example vehicle combination;
FIG.s 2A-B show unsafe behaviour modes for a vehicle combination;
FIG. 3 shows an example unit axis system for modelling a vehicle combination;
FIG. 4A shows a generic kinematic model of two units of a vehicle combination;
FIG. 4B shows a kinematic model of a vehicle combination comprising a tractor unit and a trailing unit;
FIG.s 5A to 5J show time response of different vehicle parameters during a yaw instability;
FIG. 6 a flow chart illustrating a method of detecting a yaw instability in a vehicle combination;
FIG. 7 is a block diagram illustrating an exemplary computer system in which embodiments of the present disclosure may be implemented.

SPECIFIC DESCRIPTION

The invention will now be described more fully hereinafter with reference to the accompanying drawings, in which certain aspects of the invention are shown. The invention may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present invention is not limited to the embodiments described herein and illustrated in the drawings; rather, the skilled person will recognize that many changes and modifications may be made within the scope of the appended claims. Like reference numerals refer to like elements throughout the description.

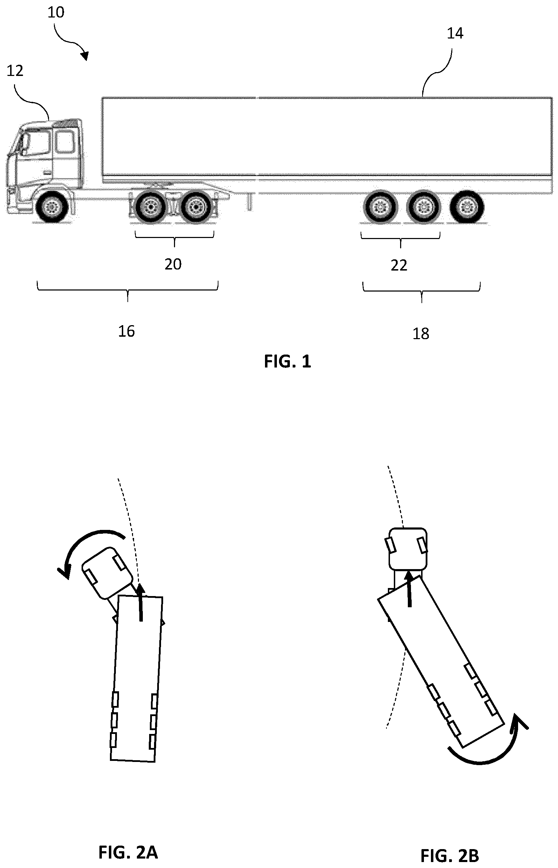

FIG. 1 shows an example vehicle combination 10 of the type considered in this disclosure. The vehicle combination 10 comprises a tractor unit 12 and at least one trailing unit 14. The tractor unit 12 is generally the foremost unit in a vehicle combination, and comprises the cabin for the driver, including steering controls, dashboard displays and the like. Generally, the tractor unit 12 is used to provide propulsion power for the vehicle combination 10. The at least one trailing unit 14 is generally used to store goods that are being transported by the vehicle combination. The at least one trailing unit 14 may be a truck, trailer, dolly and the like. The at least one trailing unit 14 may also provide propulsion to the vehicle combination 10. For example, the trailing unit 14 may comprise one or more electric motors configured to drive one or more axles or individual wheels of the trailing unit 14. A trailing unit 14 without a front axle is known as a semi-trailer.

A vehicle combination 10 may be defined by physical properties of the various units, for example a geometry of each unit and the combination as a whole, a number of axles on each unit, a distance between the axles on each unit, a number of motion support devices (including, for example, electric motors, mechanical service brakes and steering actuators) on each unit, a cornering stiffness on the tyres of each unit, an inertia about a yaw-axis of each unit, an electric motor peak torque output on each unit, an axle load on the axels of each unit.

In the example of FIG. 1, the tractor unit 12 comprises a number of tractor axles 16, and the trailing unit 14 comprises a number of trailer axles 18. At least one of the axles on each unit may be a driven axle, meaning that it is coupled to a propulsion system to drive the vehicle combination 10 forward. The propulsion systems may include traditional propulsion systems coupled to driven axles of the tractor unit 12, and/or electric motors coupled to driven axles of the tractor unit 12 or the trailing unit 14. For example, the three tractor axles 16 may comprise two driven tractor axles 20, and the three trailer axles 18 may comprise two driven trailer axles 22. A unit may be designated by the combination of axles present. In the example of FIG. 1, the vehicle combination 10 comprises a "6x4" tractor unit 12 and a "6x4" trailing unit 14, meaning each unit has six wheels, four of which are driven.

Whilst three tractor axles 16 and three trailer axles 18 are shown, it will be appreciated that any suitable number of axles may be provide on the tractor unit 12 and the at least one trailing unit 14. It will also be appreciated that any number of the tractor axles 16 and/or trailer axles 18 may be driven axles, including zero (i.e. one of the units may include at least one driven axle while the other does not). Furthermore, further trailing units 14 may be provided connected to each other. This gives rise to different types and designations of vehicle combinations.

In order to detect yaw instabilities, proper definitions the unsafe behaviour modes are required. The unsafe behaviour modes that are considered as yaw instabilities are in FIG.s 2A and 2B. FIG. 2A shows j ack-knifing the wheels of the tractor unit 12 slipping. In particular, the wheels on the two rear axles of the tractor unit 12 slip while the wheels on the trailing unit 14 do not slip, causing a jack-knife. FIG. 2B shows trailer swing due to the wheels of the trailing unit 14 slipping. In particular, the wheels on the trailing unit 14 slip while the wheels on the tractor unit 12 do not slip, causing trailer swing. An unsafe mode where both jack-knifing and trailer swing occur may be known as a complete spin out.

FIG.s 3 and 4 show examples of how the dynamics of a vehicle combination 10 can be modelled. In order to describe motion and dynamics of the different vehicle units a definition of coordinate systems and global forces acting on them is required. For this, the international standard for road vehicles ISO 8855 is used.

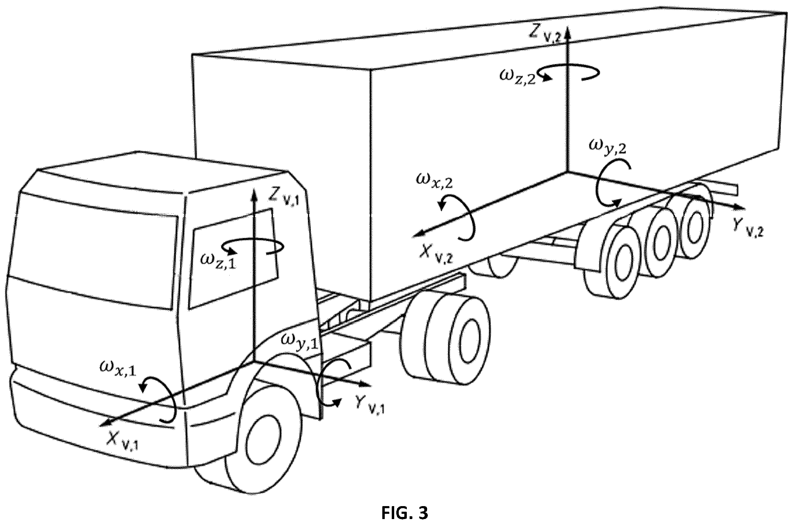

As shown in FIG. 3, $X_{V,i}$, $Y_{V,i}$, and $Z_{V,i}$ are the unit axis systems where $i \in \{1, 2, ... n\}$, with the tractor unit 12 being unit number 1, and trailing units 14 getting increasingly higher numbers. Whilst only one trailing unit 14 is shown, it will be appreciated that further trailing units may be present in the vehicle combination 10. $n$ is the total number of units of the vehicle combination 10. The rate of deviation around each axis is given by $\omega$. The yaw rate of each unit is its rate of deviation about the Z axis, denoted $\omega_{z,i}$. In the remainder of this disclosure, the yaw rate of a unit will be simply denoted $\omega_i$.

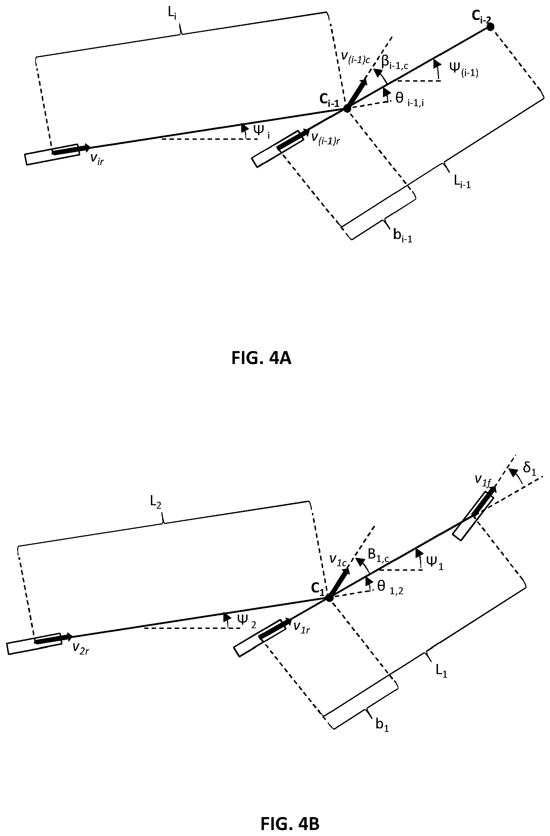

Parameters and dimensions are defined per unit i on the vehicle combination 10, as shown in FIG.s 4A and 4B. FIG. 4A is a generic kinematic model of two units *i-1* and *i* of a vehicle combination 10. Each unit has a wheelbase $L_i$. The coupling point between units *i-1* and *i* is denoted $C_{i-1}$. A distance between a rear axle of a unit *i-1* and the coupling point to the unit *i* is denoted $b_{i-1}$. Note that point $C_{i-2}$ is the front axle of tractor in the case that i=2.

The angle between the longitudinal axes of consecutive units is known as the articulation angle $\theta$. In particular, the articulation angle $\theta$ between units *i* and *i+1* is given by $\theta_{i,i+1}$ (i.e. the articulation angle $\theta$ between the tractor unit 12 and the first trailing unit 14 is denoted $\theta_{1,2}$). The rate of change of the articulation angle, known as the articulation angular rate, is denoted by $\dot{\theta}$. The yaw angle of a unit is denoted $\Psi_i$. The sideslip angle of a unit is denoted $\beta_i$. $\beta_{i-1,c}$ is the sideslip angle of unit *i-1* at the coupling point. The longitudinal velocity of a unit is taken from a rear axle of the unit and is denoted $v_{ir}$. The units have a road wheel angle $\delta_i$ (shown in FIG. 4B) which is the angle between the direction of the wheels and the longitudinal direction of the unit.

**In Error! Reference source not found.B,** a kinematic model of a vehicle combination 10 comprising a tractor unit 12 and a trailing unit 14 is shown. The tractor unit has wheelbase $L_1$ and the trailing unit 14 has wheelbase $L_2$. The tractor unit 12 and the trailing unit 14 are connected via a moment free articulation point $C_1$. The distance from the rear axle of the tractor unit 12 to the coupling point $C_1$ is denoted as $b_1$. The tractor unit 12 has a front axle velocity denoted $v_{if}$. The other parameters are given the appropriate subscripts as discussed above. The front axle of the tractor unit 14 is steered with a road wheel angle $\delta$, which is determined by the steering controls of the tractor unit 14.

The vehicle is modelled as a single-track model, i.e., left and right wheels on a given axle are considered together. The real units can have axle groups with several axles, but in the model they are considered together, i.e., the tractor unit 14 is modelled with only one front and one rear wheel and the trailing unit 14 is modelled with only one wheel. The tyres are modelled with no tyre slip, which means that the tyre velocity vectors $v_{1r}$, $v_{1f}$ and $v_{2r}$ are directed along the centreline of the tyres.

The inventors have determined that the yaw instabilities shown in FIG.s 2A and 2B can be described by the time response of a number of different vehicle parameters. In particular, one or more of a yaw rate $\omega$, a longitudinal wheel slip, a sideslip angle $\beta$, or an understeering gradient $K_{us}$ of a tractor unit 12 or a trailing unit 14, or an articulation angle $\theta$ or an articulation angular rate $\dot{\theta}$ of the vehicle combination, can be indicative of a yaw instability in a vehicle combination.

Examples of these time responses are shown in FIG.s 5A-5J. The time responses are based on real tests of a vehicle combination 10 comprising a tractor unit 12 and a trailing unit 14. The vehicle combination 10 is protected against a severe jack knife by means of a jack-knife protection cable connected between the tractor unit 12 and the trailing unit 14. The jack-knife protection cables allow maximum of 60° articulation angle, at which point the cable tightens and prevents a catastrophic jack-knife.

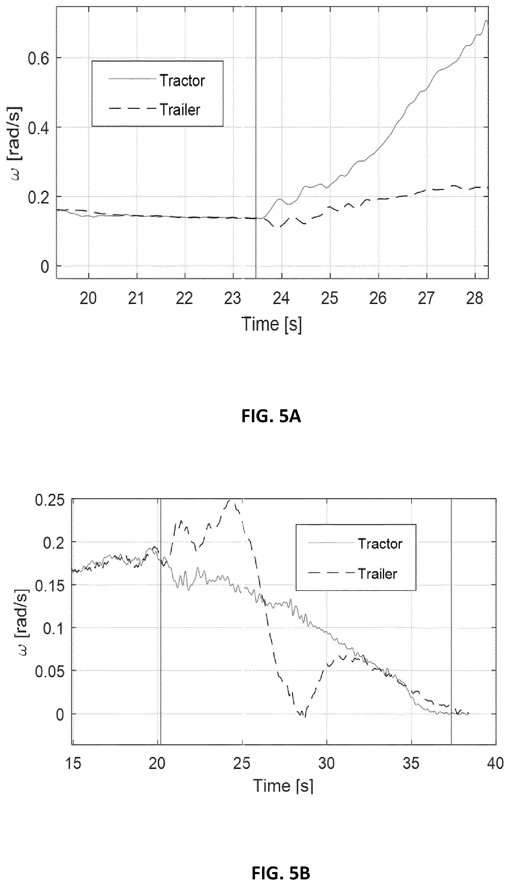

FIG. 5A is a plot of the yaw rate $\omega$ of the tractor unit 12 and the trailing unit 14 for a jack-knife case. The vertical line at 23.5s indicates the time instant at which braking started. As can be seen, both the yaw rate $\omega_1$ of the tractor unit 12 and the yaw rate $\omega_2$ of the trailing unit 14 grow from a steady state value once braking is applied. Therefore, both yaw rates can be indicative of a jack-knife occurring in the vehicle combination 10, and in particular the yaw rate $\omega_1$ of the tractor unit 12. The yaw rate $\omega_1$ of the tractor unit 12 grows much faster than the yaw rate $\omega_2$ of the trailing unit 14. Therefore, the yaw rate $\omega_1$ of the tractor unit 12 is a particularly good indicator of a jack-knife. Furthermore, the yaw acceleration $\dot{\omega}_i$ increases for a short time before decreasing. The yaw angle $\Psi_i$ will keep increasing as long as the vehicle combination 10 turns around a vertical axis.

FIG. 5B is a plot of the yaw rate $\omega$ of the tractor unit 12 and the trailing unit 14 for a trailer swing case. The vertical line at 20s indicates the time instant at which braking started, and the vertical line at 37.5s indicates the time instant at which braking stopped. As can be seen, the yaw rate $\omega_1$ of the tractor unit 12 decreases, whilst the yaw rate $\omega_2$ of the trailing unit 14 fluctuates, first increasing, then decreasing, increasing again and finally decreasing again. Therefore, both yaw rates can be indicative of trailer swing occurring in the vehicle combination 10, and in particular the yaw rate $\omega_2$ of the trailing unit 14. The relatively large fluctuations in the yaw rate $\omega_i$ of the trailing unit 14 mean that the yaw rate $\omega_i$ of the trailing unit 14 is a particularly good indicator of trailer swing. Furthermore, the yaw acceleration $\dot{\omega}_i$ increases for a short time before decreasing. In this case, it first grows to be positive before decreasing and becoming negative. The yaw angle $\Psi_i$ will keep increasing as long as the vehicle combination 10 turns around a vertical axis. In this case, the trailing unit 14 stabilizes after some time and so the yaw angle $\Psi_2$ of the trailing unit 14 will increase before decreasing and becoming close to the yaw angle $\Psi_1$ of the tractor unit 12.

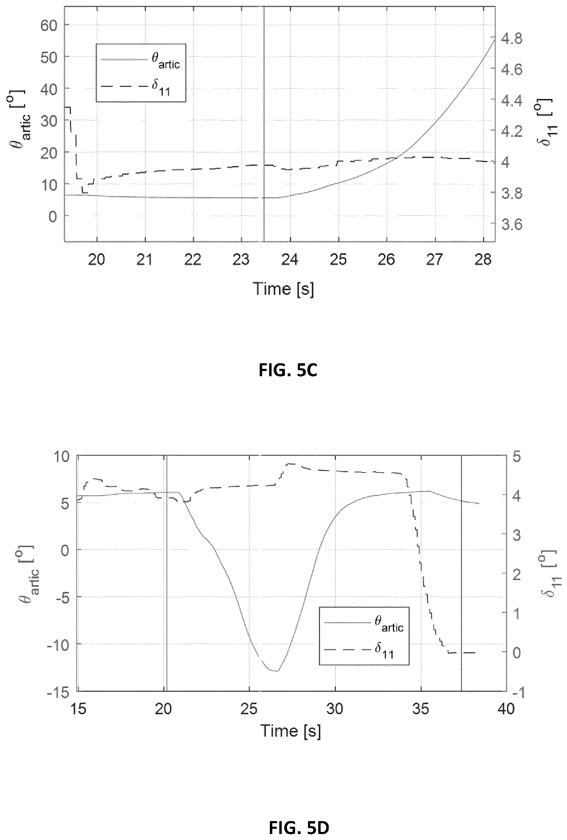

FIG. 5C is a plot of the articulation angle $\theta$ and the road wheel angle $\delta$ of a tractor unit for a jack-knife case. Again, the vertical line at 23.5s indicates the time instant at which braking started. As can be seen, the articulation angle $\theta$ grows significantly in a positive direction. This is for a left-hand turn, and it will be appreciated that the articulation angle $\theta$ would

grow in a negative direction for a right-hand turn. Therefore, the articulation angle $\theta$ can be indicative of a jack-knife occurring in the vehicle combination 10. The articulation angular rate $\dot{\theta}$ of the vehicle combination 10 increases for certain time in either a positive or negative direction until the tractor unit 12 hits the trailing unit 14 when the jack-knife occurs.

FIG. 5D is a plot of the articulation angle $\theta$ and the road wheel angle $\delta$ of a tractor unit for a trailer swing case. Again, the vertical line at 20s indicates the time instant at which braking started, and the vertical line at 37.5s indicates the time instant at which braking stopped. As can be seen, the articulation angle $\theta$ fluctuates, first decreasing, then increasing. Therefore, the articulation angle $\theta$ can be indicative of trailer swing occurring in the vehicle combination 10. The articulation angular rate $\dot{\theta}$ of the vehicle combination 10 increases for certain time in either a positive or negative direction. However, if the trailer swing is not catastrophic and stabilises over time, then the articulation angular rate will decrease and change sign to until the articulation angle reaches a quasi-steady state value.

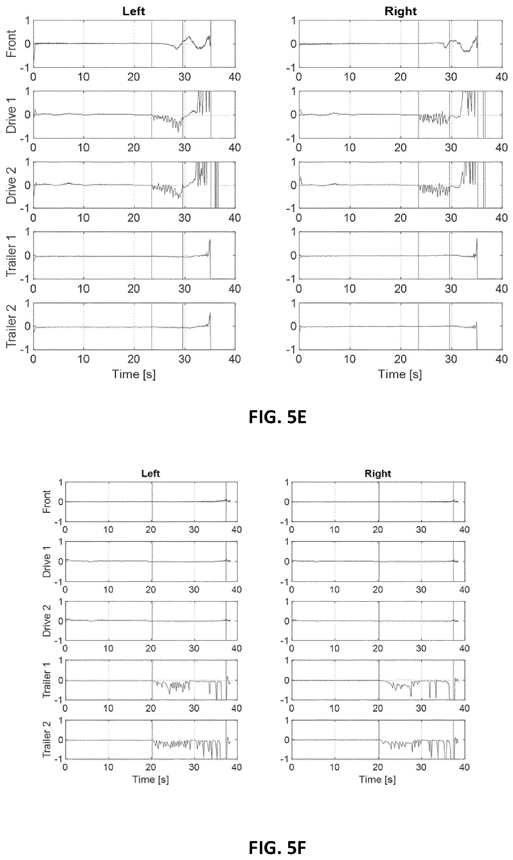

FIG. 5E is a plot of the longitudinal slip for each wheel of a vehicle combination 10 for a jack-knife case. The vertical line at 23s indicates the time instant at which braking started, and the vertical line at 29.5s indicates the time instant at which braking stopped. As can be seen, the longitudinal slip of the wheels of the tractor unit 12 becomes significantly unstable and tends negatively after braking starts. Therefore, the longitudinal slip of the wheels of the tractor unit 12 is a particularly good indicator of a jack-knife. This does not require any monitoring of the trailing unit 14 or the articulation angle $\theta$, meaning that this finding can be applied to vehicle combinations with trailers lacking sensors.

FIG. 5F is a plot of the longitudinal slip for each wheel of a vehicle combination 10 for a trailer swing case. The vertical line at 20s indicates the time instant at which braking started, and the vertical line at 37.5s indicates the time instant at which braking stopped. As can be seen, the longitudinal slip of the wheels of the trailing unit 14 becomes significantly unstable and tends negatively after braking starts. Therefore, the longitudinal slip of the wheels of the trailing unit 14 is a particularly good indicator of trailer swing. This does not require any monitoring of the tractor unit 12 or the articulation angle $\theta$.

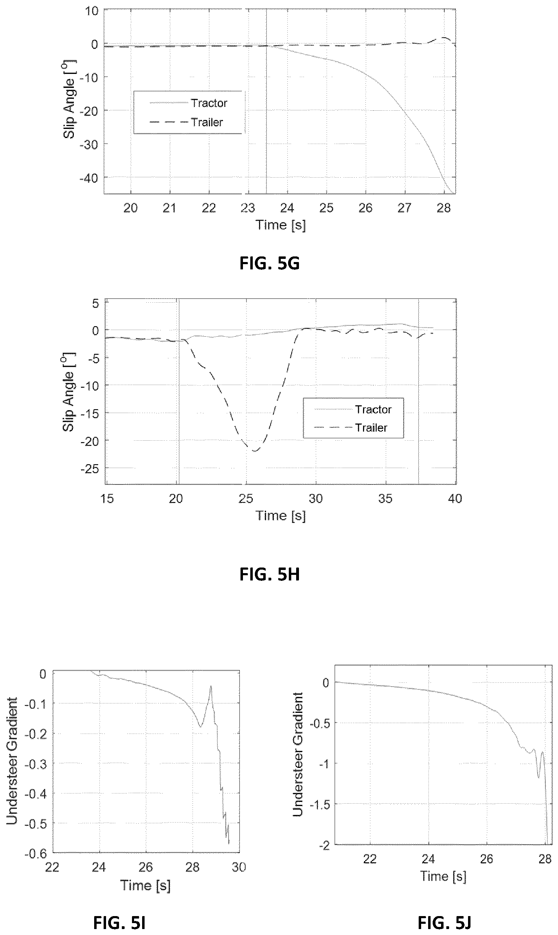

FIG. 5G is a plot of the sideslip angle $\beta_1$ of a tractor unit 12 and a trailing unit 14 for a jack knife case. As can be seen, the sideslip angle $\beta_1$ of the tractor unit 12 grows significantly from its initial value. Therefore, the sideslip angle $\beta_1$ of the tractor unit 12 is a particularly good indicator of a jack-knife. This does not require any monitoring of the trailing unit 14 or the articulation angle $\theta$, meaning that this finding can be applied to vehicle combinations with trailers lacking sensors.

FIG. 5H is a plot of the sideslip angle $\beta_i$ of a tractor unit 12 and a trailing unit 14 for a trailer swing case. As can be seen, the sideslip angle $\beta_i$ of the trailing unit 14 grows significantly from its initial value, before returning to its initial level. Therefore, the sideslip angle $\beta_i$ of the trailing unit 14 is another good indicator of a jack-knife. This does not require any monitoring of the trailing unit 14 or the articulation angle $\theta$, meaning that this finding can be applied to vehicle combinations with trailers lacking sensors.

As can also be seen from FIG.s 5G and 5H, the rate of change of the sideslip angle (the sideslip angular rate) of the tractor unit 12 and the trailing unit 14 is approximately constant and non-zero, at least in the early stages of yaw instability. As such, the sideslip angular rate of the units is another good indicator of a yaw instability and can be used to determine the time when it will happen. For example, the sideslip angular rate is near zero for steady state driving, and becomes non-zero (or at least relatively large) at the onset of an instability. Therefore, a threshold can be set that indicates when the sideslip angular rate increases beyond the expected low value, indicating the onset of an instability.

FIG. 5I is a plot of the understeering gradient $K_{us}$ of the tractor unit 12 for a jack-knife case. The plot is shown up until the time at which braking applied by the on-board computer is stopped. The time response is significantly different from that for a typical braking case. In particular, the understeering gradient $K_{us}$ grows quickly in a negative direction, meaning that the tractor unit 12 is oversteered. The peak at 28.5 seconds is the point at which the jack.-knife cable tightens. As discussed above, the inventors have determined that yaw instabilities start with oversteering. Therefore, the understeering gradient $K_{us}$ of the tractor unit 12 is a particularly good indicator of a jack-knife. This does not require any monitoring of the trailing unit 14 or the articulation angle $\theta_{1,2}$, meaning that this finding can be applied to vehicle combinations with trailers lacking sensors.

FIG. 5J is a plot of the understeering gradient $K_{us}$ of the trailing unit 14 for a trailer swing case. The plot is shown for an initial period of braking. The time response is significantly different from that for a typical braking case. In particular, the understeering gradient $K_{us}$ grows quickly in a negative direction, meaning that the trailing unit 14 is oversteered. In fact, it has been found that the understeering gradient $K_{us}$ of the trailing unit 14 tends towards negative infinity when the trailing unit 14 corrects itself and the yaw rate becomes zero. As discussed above, the inventors have determined that yaw instabilities start with oversteering. Therefore, the understeering gradient $K_{us}$ of the trailing unit 14 is a particularly good indicator of trailer swing. This does not require any monitoring of the tractor unit 12. It is noted that understeering gradient is normally defined for tractor units but not trailing units. Therefore, consideration of the understeering gradient of the trailing unit 14 is in itself a new concept.

Each of these parameters can be used individually to detect yaw instabilities in a vehicle combination. An example method for detecting a yaw instability based on the yaw rate $\omega$ of a tractor unit or a trailing unit, the articulation angle $\theta$, and/or the articulation angular rate $\dot{\theta}$ of the vehicle combination is disclosed in co-pending Swedish patent application, which is filed on the same day as this patent application (15 July 2022), with application number PCT/EP2022/069950. An example method for detecting a yaw instability based on the longitudinal wheel slip of a tractor unit or a trailing unit is disclosed in co-pending Swedish patent application, which is filed on the same day as this patent application (15 July 2022), with application number PCT/EP2022/069957. An example method for detecting a yaw instability based on the sideslip angle $\beta$ of a tractor unit or a trailing unit is disclosed in co-pending Swedish patent application, which is filed on the same day as this patent application (15 July 2022), with application number PCT/EP2022/069954. An example method for detecting a yaw instability based on an understeering gradient $K_{us}$ of a tractor unit or a trailing unit is disclosed in co-pending Swedish patent application, which is filed on the same day as this patent application (15 July 2022), with application number PCT/EP2022/069951.

Each of these methods can detect yaw instabilities in a vehicle combination. However, it may be desired to combine these methods to leverage the advantages of each one. Therefore, a method is required to combine and arbitrate among different parameters and detection algorithms. With this in mind, a method is proposed in which these various parameters of the vehicle combination 10 are monitored to determine if the vehicle combination 10 is operating in a safe manner. In particular, a plurality of probability values representing the probability of a yaw instability can be determined based on a respective parameter. The probability values can be weighted and combined to provide a combined probability value representing the probability of an upcoming or ongoing yaw instability occurring in the vehicle combination.

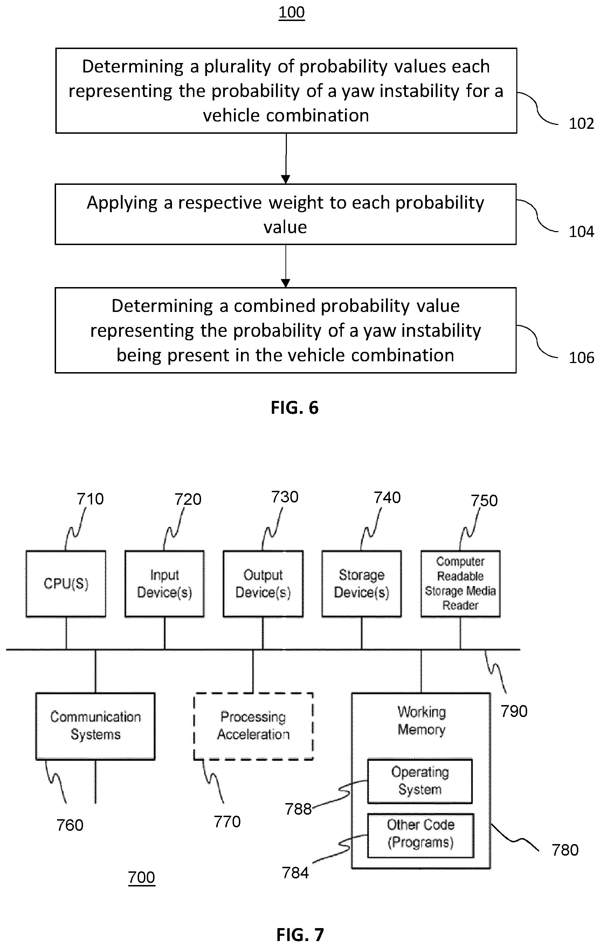

FIG. 6 is a flow chart illustrating a method 100 of detecting a yaw instability in a vehicle combination, such as the vehicle combination 10, comprising a tractor unit 12 and at least one trailing unit 14.

The method 100 comprises, at step 102, determining a plurality of probability values. Each represents the probability of a yaw instability for the vehicle combination 10. In particular, each probability value represents the probability of a yaw instability based on a respective parameter. The parameters that may be used to determine the probability values may be those mentioned above. In particular, the plurality of parameters comprises at least one of a yaw rate of the tractor unit 12 and/or at least one trailing unit 14, an articulation angle or an articulation angular rate of consecutive units, a longitudinal wheel slip of the wheels of the tractor unit 12 and/or the at least one trailing unit 14, a sideslip angle of the tractor unit 12 and/or at least one trailing unit 14, and an understeering gradient of the tractor unit 12 and/or at least one trailing unit 14.

The probability values may be determined based on a reference value and a current value of a given parameter. The reference value may be associated with a safe operation mode of the vehicle combination 10. That is to say, a safe value or range of values for a given parameter may be determined such that, if the vehicle combination 10 is operating within the bounds set by that value, then the vehicle combination 10 can be considered to be operating safely.

In some embodiments, a difference may be determined between the reference value and the current value of the parameter. This difference is indicative of the likelihood of an ongoing or upcoming yaw instability occurring in the vehicle combination 10. As the reference value is associated with a safe operation mode of the vehicle combination 10, a larger difference may indicate an increased probability of a yaw instability being present.

The reference value, $\omega_{1,ref}$, for the yaw rate of the tractor unit may be a modelled value, $\omega_{1,model}$. The modelled value $\omega_{1,model}$ may be determined using any suitable model known in the art. In one example, the modelled value $\omega_{1,model}$ may be given by:

$$\omega_{1,model} = \frac{v_{1r} \tan \delta_1}{L_1}$$

where $v_{1r}$ is the longitudinal speed of the tractor unit, $\delta_1$ is the road wheel angle of the tractor unit, and $L_1$ is the wheelbase of the tractor unit. It is noted that the longitudinal speed $v_{1r}$ of the vehicle combination 10 is taken from a rear axle of the tractor unit 12, as it moves along the longitudinal axis of the vehicle combination 10, whereas the front axle is steered with the road wheel angle $\delta$, and so is not precisely equal to the longitudinal speed of the vehicle combination 10.

Similarly, the reference value for the yaw rate of a first trailing unit, $\omega_{2,model}$, can be given by:

$$\omega_{2,model} = \frac{v_{1r}}{L_2} \left( \sin \theta_{1,2} + \cos \theta_{1,2} \cdot \frac{b_1 \cdot \tan \delta_1}{L_1} \right)$$

where $\theta_{1,2}$ is the articulation angle of the vehicle combination, $b_1$ is the distance from the rear axle of the tractor unit to a coupling point $p$, $\delta_1$ is the road wheel angle of the tractor unit, and $L_i$ is the wheelbase of unit $i$.

Similarly, the reference value, $\omega_{i,ref}$, for the yaw rate of a trailing unit, $i>2$, may be a modelled value, $\omega_{i,model}$. The modelled value $\omega_{i,model}$ may be determined using any suitable model known in the art. In one example, the modelled value $\omega_{i,model}$ may be given by:

$$\omega_i = \frac{v_{ir} \cdot \tan(\theta_{i-1,i} + \beta_{i-1,c})}{L_i}$$

where

$$\beta_{i,c} = \arctan\left(\frac{b_i \cdot \tan(\theta_{i-1,i} + \beta_{i-1,c})}{L_i}\right)$$

and

$$v_{ir} = \frac{v_{(i-1)r}}{\cos(\beta_{i-1,c})} \cdot \cos(\theta_{i-1,i} + \beta_{i-1})$$

where $\theta_{i-1,i}$ is the articulation angle between units *i-1* and *i*, $\beta_{i,c}$ is the sideslip angle for unit *i-1*, $b_i$ is the distance from the rear axle of the unit *i* to a coupling point C, and $L_i$ is the wheelbase of unit i.

The current value of the yaw rate $\omega_i$ of a unit may be obtained directly from a gyroscope sensor of the unit.

The reference value, $\theta_{1,2,ref}$, for the articulation angle between a tractor unit and a first trailing unit may also be a modelled steady state value, $\theta_{1,2,ss,model}$, determined using any suitable model known in the art. In one example, the modelled value $\theta_{1,2,ss,model}$ may be given by:

$$\theta_{1,2,ss,model} = \frac{L_2}{L_1}\left(1 - \frac{b_1}{L_2}\right)\tan\delta_1$$

A reference value, $\dot{\theta}_{1,2,ref}$, for the articulation angular rate between a tractor unit and a first trailing unit may be a modelled value, $\dot{\theta}_{1,2,model}$, determined using any suitable model known in the art. In one example, the modelled value $\dot{\theta}_{1,2,model}$ ay be given by:

$$\dot{\theta}_{1,2,model} = -\frac{v_{1r}}{L_2}\sin\theta_{1,2} + \frac{v_{1r}}{L_1}\left(1 - \frac{b_1}{L_2}\cos\theta_{1,2}\right)\tan\delta_1$$

A reference value $\dot{\theta}_{i,i+1,ref}$ for the articulation angular rate between consecutive trailing units *i, i+1*, $\dot{\theta}_{i,i+1,model}$, can be given by:

$$\dot{\theta}_{i,i+1,model} = \omega_i - \omega_{i+1}$$

A reference value for the steady state articulation angle between consecutive trailing units i, *i+1*, $\theta_{i,i+1,ss,model}$, can be found by using setting $\dot{\theta}_{i,i+1}$ to zero, then solving for $\theta_{i-1,i}$. Additionally, a small angle approximation can be applied for $\theta_{i,i+1}$, where $\cos(\theta_{i,i+1}) = 1$ and $\sin(\theta_{i,i+1}) \cong \theta_{i,i+1}$.

The current value of the articulation angle $\theta$ can be obtained either from an articulation angle sensor of the unit, or it can be estimated with any form of estimator known in the art, such as by using camera etc. The current value of the articulation angular rate $\dot{\theta}$ can be determined by derivation of the articulation angle, by determining the difference of the yaw rates $\omega_i$ of consecutive units, or by a combination of the two with a filter such as Kalman filter. The yaw angle $\Psi_i$ can be determined from a global positioning system (GPS) and/or a navigation system, perhaps using a filter where a first input is from a GPS/navigation system and a second input is from the integrals of yaw rates.

The longitudinal slip is the relative motion between a tyre and the road surface it is moving on. The longitudinal slip can be defined as:

$$slip = \frac{r_{ik}\Omega_{ik} - v_{xik}}{v_{xik}}$$

where $r_{ik}$ is the radius of wheel *k* of unit *i* radius at the point of contact with the road, $\Omega_{ik}$ is the longitudinal component of the rotational speed of the wheel *k* of unit *i*, and $v_{xik}$ is the longitudinal speed of the wheel *k* of unit *i*.

The reference value, $S_{xi,ref}$, for the longitudinal slip of a wheel of a unit, $i$, may be a threshold value. In one example, the reference value, $S_{xi,ref}$, is a fixed threshold determined based on the slip ratio of the wheel at a maximum tyre force. In another example, the reference value, $S_{xi,ref}$, is a variable threshold determined based on the inverse of a current value of a lateral acceleration of the tractor unit, a road wheel angle of the tractor unit, the road wheel angle of the trailing unit, and/or an articulation angle of consecutive units.

Longitudinal slip is dependent on a number of factors, such as road friction. In general, the tyre force increases as the road friction increases. Furthermore, the tyre force reaches a maximum value as the slip ratio increases from zero, before decreasing. This means that after achieving this much slip, no more force can be created and the wheels will likely be either be locked (while braking) or will spin (during propulsion). The maximum tyre force occurs at lower slip ratios for lower friction surfaces. For example, for $\mu=1$ (e.g. asphalt), the maximum force is obtained at a slip ratio of around 0.12, whereas for $\mu=0.3$ (e.g. ice or snow), the maximum force is obtained at a slip ratio of around 0.03.

A threshold for longitudinal slip can be set at a certain percentage of the slip ratio that corresponds to maximum force. The percentage used to determine the threshold can be determined based on experimental or model data relating to the vehicle combination 10. This can be done using real tests, computer model simulations, a machine learning model, or other suitable means known in the art. For example, the longitudinal slip threshold can be 70% of the slip ratio for the maximum tyre force. The threshold can also be adjusted based on other factors, such as road slope and load distribution. For example, for tractor braking and trailer propulsion, downhill slopes are riskier, and so the threshold can be smaller for such conditions.

To determine a variable threshold based on the current operating state of the vehicle combination 10, a baseline value for the threshold can be related to one or more parameters of a current operating state. The baseline value can be set based on a fixed threshold, as discussed above. The baseline threshold can be varied with respect to vehicle states such as lateral acceleration $a_y$ of the tractor unit 12 and/or the at least one trailing unit 14, road wheel angle $\delta$ of the tractor unit 12 and/or the at least one trailing unit 14, a road profile, and/or an articulation angle $\theta$ of consecutive units. In particular, the threshold can decrease as the values of these parameters. That is to say, as lateral acceleration $a_y$, road wheel angle $\delta$ and/or articulation angle $\theta$ increase, the threshold is reduced. For example, for zero lateral acceleration, the threshold can be maintained relatively high, for example 0.12. For a larger lateral acceleration (e.g., 0.4g) the threshold can be decreased to, for example. 0.07. This is because at high values of these parameters, the onset of an instability is more likely than at lower values. These parameters can be used individually or in combination. For example, if the vehicle combination is in a curve, all three parameters will be non-zero and relatively high, and even a small change in longitudinal slip can be used to detect any potential instability.

The current value $S_{xi,k}$ of the longitudinal slip for the wheel $k$ of a unit can be determined in a number of ways. For example, it can be determined using one or more sensors on the vehicle combination that give values required to calculate the longitudinal slip. This may be a wheel speed sensor, which typically all wheels of a vehicle combination will have. The vehicle speed can be estimated in many ways, such as with a Kalman filter or similar in combination with a vehicle model and sensor readings, including accelerometers, yaw rate sensors, wheel speed sensors, propulsion shaft speed sensors, brake pressures, and engine torque estimations. Once the longitudinal slip values for the wheels are determined, a single value can be selected. The current value can be the longitudinal slip from a single wheel, a single axle, a maximum longitudinal slip value from a plurality of wheels, or an average of the longitudinal slip values from a plurality of wheels. In some embodiments, slip values from all the wheels of a unit are used to check the longitudinal slip. Other selections will be readily envisaged. In some embodiments, an absolute value of the longitudinal slip can be used. In other embodiments, a positive value of the longitudinal slip can be used for propulsion, and a negative value of the longitudinal slip can be used for braking.

In other embodiments, a binary probability value can be determined for longitudinal slip. For example, if a particular mechanism is activated in response to longitudinal slip in the wheels, this can also be an indication of a yaw instability. Such mechanisms may include an anti-lock braking system (ABS) for braking, for example including a slip control system and other types of control strategies, a traction control system for propulsion, and/or an electronic stability program (ESP) for stability control.

The sideslip angle, $\beta$, is the angle between the longitudinal direction and the traveling direction of a unit. It describes the attitude of the vehicle in relation to the circular path during a steady-state cornering. The sideslip angle can be defined as:

$$\beta_i = arctan\left(\frac{v_{iy}}{v_{ix}}\right)$$

where $v_{iy}$ is the lateral velocity at a point on the unit, and $v_{ix}$ is the longitudinal velocity at a point on the unit. The point on the unit at which these values are taken may be an axle centre, for example at the rear axle. The side-slip angle, $\beta_1$, of the tractor unit 12 can be measured at the centre of the drive axles of the tractor unit 12. The side-slip angle, $\beta_i$, of the trailing

unit 12 can be measured at the centre of the trailer axles of the trailing unit 12.

The reference value, $\beta_{1,ref}$ for the sideslip angle for a given unit is a modelled or steady state value of the sideslip angle. The steady state value can be taken as the value when braking starts, or it can be calculated via a vehicle model as discussed above. To determine a model value, it is required to calculate the lateral velocity at the centre of gravity of the units and use this together with the yaw rate of the unit to calculate the lateral velocity of the unit, and therefore the sideslip angle at any point. This involves solving many equations simultaneously, which can be achieved by linearization.

The current value $\beta_i$ of the sideslip angle for a unit can be determined in a number of ways. For example, the current value of the sideslip angle can be determined using one or more sensors on the vehicle combination 10, for example inertial or navigational sensors disposed on the units of the vehicle combination 10. Typically inertial and navigational systems output the sideslip angle with high accuracy. In some examples, signals from an inertial measurement unit (IMU) and a GPS device may be combined, for example using a Kalman filter. Alternatively, a vehicle model can be used to estimate the sideslip angle. The sideslip angular rate can then be derived from the measured or modelled values of the sideslip angle.

The probability value for the sideslip angle can therefore be given by $(\beta_i - \beta_{i,ref})^2$. However, in some embodiments, it may be desired to monitor the deviation of the current value $\beta_i$ of the sideslip angle from the reference value $\beta_{i,ref}$ for the sideslip angle with respect the a threshold, which can be expressed as $\Delta\beta_i^{threshold}$. It may be considered acceptable to have some deviation from the reference value $\beta_{i,ref}$ as long as it is below the threshold as $\Delta\beta_i^{threshold}$. In this case, the probability value for the sideslip angle can therefore be given by:

$$\left(\max\left(abs\left(\beta_i - \beta_{i,ref}\right) - \Delta\beta_i^{threshold}\right), 0\right)^2$$

In this case, if $\Delta\beta_i^{threshold}$ is 5°, and $(\beta_i - \beta_{i,ref})$ is 4°, then the probability value will be zero. If $(\beta_i - \beta_{i,ref})$ grows beyond 5°, the probability value will become non-zero.

The reference value, $K_{us,i,ref}$ for the understeering gradient of a unit, $i$, may be a threshold value. In one example, the reference value $K_{us,i,ref}$ is a fixed threshold determined for example based on model or experimental data as discussed above. In another example, the reference value $K_{us,i,ref}$ is a variable threshold determined based on a current operating state of the vehicle combination.

To determine a fixed threshold, experimental or model data relating to a vehicle combination 10 can be used to determine safe and unsafe operating conditions. This can be done using real tests, computer model simulations, a machine learning model, or other suitable means known in the art. In some examples, the fixed threshold can be set at zero, meaning that the threshold is met as soon as any oversteer is detected.

In some examples, a fixed threshold can be set as a factor of a modelled value $K_{us,i}^{model}$, e.g. $0.7K_{us,i}^{model}$. The factor can be determined based on experimental or model data. Normally, the modelled value $K_{us,i}^{model}$ is a fixed value and defined for the linear range of the tyres. The modelled value $K_{us,i}^{model}$ for a unit can be given by:

$$K_{us,i}^{model} = \frac{C_i \cdot l_r - C_{i-1} \cdot l_f^*}{C_i \cdot C_{i-1} \cdot L_i^*}$$

where $C_i$ is the cornering stiffness used for the unit $i$, $C_{i-1}$ is the cornering stiffness used for the unit $i-1$, $l_r$ is the distance from the rear axle to the centre of gravity of the unit, $l_f^*$ is the modified distance from the coupling point to the centre of gravity of the unit and $L_i^*$ is the modified wheelbase of the unit. Taking $L_i$ as the wheelbase of the unit (given by $l_f + l_r$ the distances from the front and rear axles to the centre of gravity of the unit respectively), $L_i^* = L_i - \dfrac{b}{\cos\theta_{i-1,i}}$ and

$l_f^* = l_f -- \dfrac{b}{\cos\theta_{i-1,i}}$.

For units having a single axle, the cornering stiffness $C_i$ (and $C_{i-1}$, etc.) is the cornering stiffness for that axle. A unit may have multiple axles that can be grouped together as front or rear groups. For units having more than one axle in a front or rear group, the axles in the group are considered together as a single axle and the cornering stiffness $C_i$ is the cornering

stiffness for that group. If a unit has more than one group, the cornering stiffness for the rear group (axle) is used.

If a unit has exactly two axle groups, the modelled value $K_{us,i}^{model}$ for the unit can be given by.

$$K_{us,i}^{model} = \frac{C_r \cdot l_r - C_f \cdot l_f}{C_f \cdot C_r \cdot L}$$

where $C_r$ is the cornering stiffness for the rear axle of the unit, and $C_f$ is the cornering stiffness for the front axle of the unit.

The load distribution can also be taken into account. Typically, the cornering stiffness is given by:

$$C = C_C F_z$$

where $C_C$ is the normalized cornering stiffness with respect to a load (different tyres may have different values of $C_C$) and $F_z$ is the normal load on the axle or wheel. So, in the equation above, the cornering stiffness $C_i$ already takes the load into account. If an axle has double the load with the same tires, it will have double the cornering stiffness. Put otherwise, the cornering stiffness increases linearly with load on the axle. This means that an axle with a heavier load can generate a larger lateral force $F_y$, since:

$$F_y = C\beta$$

where $\beta$ is the sideslip angle. As such, the cornering stiffness describes how much force (a tyre can generate per radian of sideslip angle.

The load distribution will therefore affect $C_i$, $l_f$ and $l_r$ (the position of the centre of gravity will change). Therefore, the load distribution can dramatically affect the understeer of a unit.

The modelled value $K_{us}^{model}$ described above is based on the tyre model disclosed in the Vehicle Dynamics Compendium from Bengt Jacobson et al, Vehicle Dynamics Group, Division Vehicle and Autonomous Systems, Department of Mechanics and Maritime, Chalmers University of Technology, www.chalmers.se. This also allows forces and sideslip to be taken into account, giving a more robust model.

To determine a variable threshold based on the current operating state of the vehicle combination 10, experimental or model data relating to a vehicle combination 10 can be used to determine safe and unsafe operating conditions as the operating state of the vehicle combination 10 changes. This can be done using real tests, computer model simulations, a machine learning model, or other suitable means known in the art. For example, a number of manoeuvres can be logged both with and without yaw instabilities. These can be performed with many different speeds, lateral accelerations, frictions, slopes, load distributions, road wheel angles, etc. These can then be evaluated and the thresholds can be tuned, if possible as a function of vehicle states and/or environmental variables. Alternatively, a machine learning model can be trained to tune the thresholds.

The threshold can vary with vehicle states such as longitudinal speed $v_{1r}$ of the vehicle combination 10, lateral acceleration $a_y$ of the tractor unit 12 and/or the at least one trailing unit 14, and road wheel angle $\delta$ of the tractor unit 12, a road profile, and/or a road surface friction coefficient $\mu$.

For example, for longitudinal speed, the threshold, $K_{us,i}^{threshold}$, can be given by:

$$K_{us,i}^{threshold} = \left(A + B \cdot \min\left(\frac{\mathrm{abs}(v_{ir})}{C}, 1\right)\right) \cdot K_{us,i}^{model}$$

where A is the ratio of $K_{us,i}^{model}$ at zero speed, and A+B is the ratio for speed C. The value of B can be set as positive or negative dependent on how much oversteering should be allowed for high or low speeds. For example, if tests or models show that a certain amount of oversteering can be present at high speed without instability, but the same amount of oversteering does cause instability at low speed, the limit can be set differently for different speeds. At speeds larger than C, the minimum function should be removed.

For lateral acceleration, the threshold, $K_{us}^{threshold}$, can be given by:

$$K_{us,i}^{threshold} = \left( A + B \cdot \min\left( \frac{\text{abs}(a_{y,i})}{C \cdot g}, 1 \right) \right) \cdot K_{us,i}^{model}$$

where A, B and C are constants, $a_{y,i}$ is the lateral acceleration of the unit, and g is the gravitational acceleration. In particular, A is the ratio of $K_{us,i}^{model}$ to be used with zero lateral acceleration, and A+B is the ratio for a lateral acceleration C*g. The value of B can be set as positive or negative dependent on how much oversteering should be allowed for high or low lateral acceleration. C it set corresponding to a maximum realistic lateral acceleration. It is noted that the maximum realistic lateral acceleration for heavy vehicles is typically between *0. 3g* and *0.4g.*

The constants A and B may be determined based on experimental or model data. For example, for lower lateral accelerations, the threshold can be set at a maximum of 70% of the value $K_{us,i}^{model}$, meaning A is set at 0.7. For 0.4g, the threshold can be set of 50% of the value $K_{us,i}^{model}$, meaning B is set at 0.2. The threshold, $K_{us,i}^{threshold}$, can therefore be given by:

$$K_{us,i}^{treshold} = \left( 0.7 - 0.2 \cdot \min\left( \frac{\text{abs}(a_{y,i})}{0.4 \cdot g}, 1 \right) \right) \cdot K_{us,i}^{model}$$

This means that for lower lateral accelerations, more oversteering is allowed. The constants A and B can be adjusted based on how much oversteering is allowed for different lateral accelerations. For example, B could be set as positive if less oversteering is to be allowed for high lateral accelerations.

When calculating the threshold, $K_{us,i}^{threshold}$, for a given unit, the lateral acceleration, $a_y$, may be that of the same unit, or of another unit. For example, it may be advantageous to use the lateral acceleration of a stable unit to detect an instability at the other unit. It may also be advantageous to use the lateral acceleration of the unit having the instability when the instability started. For example, it can be assumed that there is no instability before braking, and so the lateral acceleration of the unit when braking started can be taken. Another alternative is to use the steady state lateral acceleration, $a_{y,ss,i}$, which can be given by:

$$a_{y,ss,i} = \frac{v_{i,r}^2}{R}$$

where R is the turning radius.

For road wheel angle, the threshold, $K_{us,i}^{threshold}$, can be given by:

$$K_{us,i}^{threshold} = \left( A + B \cdot \min\left( \frac{\text{abs}(\delta_i)}{C}, 1 \right) \right) \cdot K_{us,i}^{model}$$

where A is the ratio of $K_{us,i}^{model}$ at zero road wheel angle, and A+B is the ratio for road wheel angle C. The value ofB can be set as positive or negative dependent on how much oversteering should be allowed for high or low road wheel angle.

For road profile, the threshold, $K_{us,i}^{threshold}$, can be given by:

$$K_{us,i}^{threshold} = \left( A + B \cdot \min\left( \frac{\text{abs}(\gamma)}{C}, 1 \right) \right) \cdot K_{us,i}^{model}$$

where A is the ratio of $K_{us,i}^{model}$ at zero road slope, and A+B is the ratio for road slope C. The value of B can be set as positive or negative dependent on how much oversteering should be allowed for high or low road slope.

For road surface friction coefficient, the threshold, $K_{us,i}^{threshold}$, can be given by:

$$K_{us,i}^{threshold} = \left( A + B \cdot min\left( \frac{abs(\mu)}{C}, 1 \right) \right) \cdot K_{us,i}^{model}$$

where A is the ratio of $K_{us,i}^{model}$ at zero road surface friction coefficient, and A+B is the ratio for road surface friction coefficient C. The value of B can be set as positive or negative dependent on how much oversteering should be allowed for high or low road surface friction coefficient.

The current value $K_{us,i}$ of the understeering gradient for a unit can be determined in a number of ways. For example, the understeering gradient of the tractor unit 12, $K_{us,tractor}$, can be given by:

$$K_{us,tractor} = \frac{v_{1,r} \tan \delta_1 - L_1 \omega_1}{v_{1,r}^2 \omega_1}$$

The understeering gradient is mostly similar to tractor understeering, but the road wheel angle $\delta$ is replaced with the articulation angle $\theta$ between the trailing unit and the unit in front. For trailing unit $i$, this is denoted $\theta_{i-1,i}$. The understeering gradient of a trailing unit 14, $K_{us,trailer}$, can then be given by:

$$K_{us,trailer,i} = \frac{v_{i,r} \tan \theta_{i-1,i} - \left( L_i - \frac{b_{i-1}}{\cos \theta_{i-1,i}} \right) \omega_i}{v_{i,r}^2 \omega_i}$$

The techniques described above may be combined, for example by means of a Kalman filter, information filter, or with any suitable arbitration scheme known in the art. For example, the difference of yaw rate signals for consecutive units gives the articulation angular rate between those units. This can be combined with the derivative of the articulation angle signal, to obtain a less noisy articulation angular rate signal. In another example, if the trailing unit 14 does not have a yaw rate sensor, but if an articulation angle sensor is available, one can derive the trailing unit yaw rate by adding the tractor unit yaw rate and the derivative of articulation angle to obtain the trailing unit yaw rate. For example, the difference between yaw rate signals from different units gives the articulation angular rate between those units, which is the derivative of the articulation angle. Therefore, by knowing two of the yaw rate of a first unit, a yaw rate of a second unit, and an articulation angle between the units, the third value can be determined. A filter such as a Kalman filter can be used to remove noise from the signals and perform the derivation/integration operations in a noise-free way.

The probability value for a given parameter can be determined be calculating the difference between the reference value and the current value. As discussed above, a larger difference may indicate an increased probability of a yaw instability being present.

Whilst each probability value in itself may be a good indicator of an upcoming or ongoing yaw instability, certain parameters may be more relevant under certain conditions. Therefore, once the probability values have been determined, they can be weighted in order to reflect their varying suitability for use in detecting a yaw instability.

At step 104, a respective weight is applied to each probability value. For the six probability values discussed above, the weights will be denoted as follows:

- yaw rate $\omega$: $W_3$
- articulation angle $\theta$: $W_4$
- articulation angular rate $\dot{\theta}$: $W_5$
- longitudinal slip: $W_2$
- sideslip angle $\beta$: $W_1$
- understeering gradient $K_{us}$: $W_6$

This denotation will be used for the remainder of this disclosure.

The weights can be set based on a number of factors. For example, the weights can be determined based on a certainty of the respective probability value, such that parameters considered to give a relatively certain detection of a yaw instability are given a relatively high weight. The weights can also be determined based on a horizon of detection associated with the parameter, such that parameters considered to give a relatively quick detection of a yaw instability are given a relatively high weight. For example, position variables (such as articulation angle and sideslip angle) have a relatively high accuracy and certainty for the detection of the yaw instabilities, but it takes time for these position variables to grow. On the other hand, the rate/speed variables (such as articulation angular rate or yaw rate) grow earlier and can be used for early detection or prediction, are less certain as they may recover and a yaw instability may not eventually occur.

The weight $W_1$ is used with the sideslip angle $\beta$ of the unit. The sideslip angle $\beta$ is considered to provide high accuracy detection of a yaw instability. Therefore, $W_1$ can be relatively high. However, the sideslip angle only grows once an inability has initiated, and when it is large the inability is likely already ongoing. Therefore, the weight $W_1$ can be tempered to take this into account.

The weight $W_2$ is used with the longitudinal slips of the wheels of a unit. The longitudinal slip is considered to have relatively low accuracy detection of a yaw instability. It depends on which wheels have high slip, how many wheels have high slip, for how long, and if the lateral acceleration is high or low. Therefore, $W_2$ can be relatively low. However, the longitudinal slip will grow before onset of a yaw instability, and is therefore an early sign for an upcoming instability. Therefore, the weight $W_2$ can be increased to take this into account.

The weight $W_3$ is used with the yaw rate $\omega$ of the unit. If the yaw rate is higher than the reference yaw rate, an instability is likely to occur or is already occurring. However, for an actual instability to occur, the yaw rate should be high for some time. Indeed, an initially high yaw rate may drop and an instability may not occur. Therefore, the yaw rate is considered a moderately accurate detection method. However, similar to longitudinal slip, the yaw rate can be used for prediction of a future instability provided that the high yaw rate is maintained. Therefore, $W_3$ can be set with a moderate magnitude.

The weight $W_4$ is used with the articulation angle $\theta$ between consecutive units. This is to provide high accuracy detection of a yaw instability: if the articulation angle is high, it is a near certain sign of an instability. Therefore, $W_4$ can be set relatively high. However, the articulation angle only grows once an inability has initiated, and when it is large the inability is likely already ongoing. Therefore, the weight $W_4$ can be tempered to take this into account.

The weight $W_5$ is used with the articulation angular rate $\dot{\theta}$ between consecutive units. If articulation angular rate is higher than the reference rate, an instability is likely to occur or is already occurring. However, for an actual instability to occur, the articulation angular rate should be high for some time. Indeed, an initially high yaw rate may drop and an instability may not occur. Therefore, the articulation angular rate is considered a moderately accurate detection method. However, similar to longitudinal slip and yaw rate, the articulation angular rate can be used for prediction of a future instability provided that the high articulation angular rate is maintained. Therefore, $W_5$ can be set with a moderate magnitude.

The weight $W_6$ is used with the understeering gradient $K_{us}$ of the unit. If the understeering gradient is lower than the threshold, an instability is likely to occur or is already occurring, or at least the unit is oversteering. If the understeering gradient is extremely low, even with a moderate weighting factor, the probability value discussed above will be high and give a fairly certain detection of instability. If the understeering gradient is only moderately below the threshold, it should be so for some time for an actual instability to occur. Similar to longitudinal slip, yaw rate and articulation angular rate, the understeering gradient can be used for prediction of a future instability provided that the low understeering gradient is maintained. Therefore, $W_6$ can be set with a moderate magnitude.

It will be appreciated that the weights can be set dependent on a priority of the method. For example, if high accuracy detection is desired, $W_1$ and $W_4$ can be given particularly high weights. If early detection is desired, $W_2$, $W_3$, $W_5$ and $W_6$ can be given particularly high weights.

For example, the weights can be determined based on other factors, such as vehicle parameters or environmental parameters. Vehicle parameters include lateral acceleration, a static load distribution of the vehicle combination, a longitudinal wheel slip of the tractor unit and/or the at least one trailing unit. Environmental parameters include road friction, road camber, and road slope.

For example, the inventors have found that, for low lateral accelerations $a_y$, yaw instabilities typically occur when there is high slip, but for high lateral accelerations, yaw instabilities typically occur even without high slip, at least at the start of braking. Therefore, $W_2$ can be set as a function of lateral acceleration $a_y$. Other weights can also be set based on the lateral acceleration $a_y$ of the unit. In particular, $W_1$, $W_2$ and $W_6$ can be increased with higher lateral acceleration, although, in general, all weights can be increased with higher lateral acceleration.

The weights can also be a function of static load distribution of the vehicle combination 10. For example, $W_2$ may be adjusted as axles with lighter loads may have larger limits, or may not be limited at all. This may require different values for $W_2$ for different wheels or axles.

The weights can also be a function of the longitudinal slip. In particular, for high longitudinal slip, the weights can be increased. For example, weights for the speed/rate related terms, $W_3$ and $W_5$, can be increased with increasing longitudinal slip.

The weights can also be a function of the road friction. For example, weights for the speed/rate related terms, $W_3$ and $W_5$, can be increased with increasing friction, although, in general, all weights can be increased with higher road friction.

The weights can also be a function of the road slope and road camber angle. For example, for tractor braking and trailer propulsion, downhill slopes are riskier. Therefore, $W_2$ for example can be higher for a positive longitudinal slip at a trailing unit or negative longitudinal slip at the tractor unit. Two different values of , $W_2$ may be used to assess positive and negative values of longitudinal slip differently.

The weights can also be a function of combinations of the vehicle states, such as yaw rates, articulation angle and articulation angular rates, sideslip angle, understeering gradient, etc. As yaw rates, articulation angle and articulation angular rate are all higher during cornering, the same logic as for lateral acceleration can be used (in general, all weights can be increased as these values increase). In one example, $W_2$ can be made a function of sideslip angle so that less longitudinal slip is allowed when side slip exists.

The weights $W_i$ can be optimised either with the traditional optimisation algorithms or train with machine learning algorithms.

In some embodiments, different weights can be used for different units (or even wheels) for the same parameter. For example, weights $W_{31}$ and $W_{32}$ may be used for the yaw rates of the tractor and trailing units respectively.

In the table below, an example schedule for setting the magnitudes of each weight $W_i$ is given. In this case, the accuracy of detection was considered important, and so $W_1$ and $W_4$ are given relatively high weights. However, as discussed above, it will be appreciated that the weights can be set dependent on a priority of the method. Indeed, two sets of weights could be used to provide two functions, one weighted towards the position variables to detect an already ongoing instability with a high accuracy, and another weighted towards the speed/rate variables to predict a future instability with less accuracy.

| Weight | Magnitude | Parameter |
|--------|-----------|-----------|
| $W_1$ | high | sideslip angle $\beta$ |
| $W_2$ | low | longitudinal slip |
| $W_3$ | medium | yaw rate $\omega$ |
| $W_4$ | high | articulation angle $\theta$ |
| $W_5$ | medium | articulation angular rate $\dot{\theta}$ |
| $W_6$ | medium | understeering gradient $K_{us}$ |

At step 106, a combined probability value is determined representing the probability of a yaw instability being present in the vehicle combination. The combined probability value is determined based on the weighted probability values. That is to say, the weighted sum of the probability values is calculated and a combined probability value is determined.

The combined probability value, J, for a yaw instability of a unit, i, may be given by:

$$J = W_1 \cdot \left(\beta_i - \beta_{i,ref}\right)^2 + W_2 \cdot \sum_i \left(S_{xi,k} - S_{xi,ref}\right)^2 + W_3 \cdot \left(\omega_i - \omega_{i,ref}\right)^2 +$$

$$W_4 \cdot \left(\theta_{i,i+1} - \theta_{i,i+1,ref}\right)^2 + W_5 \cdot \left(\dot{\theta}_{i,i+1} - \dot{\theta}_{i,i+1,ref}\right)^2$$

$$+ W_6 \left(\min\left(\left(K_{us,i} - K_{us,i,ref}\right), 0\right)\right)^2$$

It will be appreciated that some of the probability values may be omitted, or given a weight of zero, if the associated parameters cannot be determined or are not considered relevant.

A higher value of J indicates a higher probability of yaw instability. A relatively low value of J may mean that a yaw instability is upcoming or that there is a risk of a potential instability, whereas a relative high value of J may mean that a yaw instability is ongoing. There can be a mapping for different values to severity and possibility of any upcoming or ongoing yaw instability. A non-zero value may be indicative of a risk of instability, or a threshold or interval can be used to determine when the risk is present. Similarly, the order of magnitude of J depends on the selected magnitude of the weights.

To determine a probability value for jack-knifing, parameters from the tractor unit 12 can be used. The combined probability value for jack-knifing, $J_{jn}$, is therefore given by:

$$J_{jn} = W_1 \cdot (\beta_1 - \beta_{1,ref})^2 + W_2 \cdot \Sigma_i (S_{x1,k} - S_{x1,ref})^2 + W_3 \cdot (\omega_1 - \omega_{1,ref})^2 + W_4 \cdot$$

$$(\theta_{1,2} - \theta_{1,2,ref})^2 + W_5 \cdot (\dot{\theta}_{1,2} - \dot{\theta}_{1,2,ref})^2 + W_6 \left( \min \left( (K_{us,1} - K_{us,1,ref}), 0 \right) \right)^2$$

To determine a probability value for trailer swing, parameters from a trailing unit 14 can be used. The combined probability value for trailer swing, $J_{ts}$, is given by:

$$J_{ts} = W_1 \cdot (\beta_2 - \beta_{2,ref})^2 + W_2 \cdot \Sigma_i (S_{x2,k} - S_{x2,ref})^2 + W_3 \cdot (\omega_2 - \omega_{2,ref})^2 + W_4 \cdot$$

$$(\theta_{1,2} - \theta_{1,2,ref})^2 + W_5 \cdot (\dot{\theta}_{1,2} - \dot{\theta}_{1,2,ref})^2 + W_6 \left( \min \left( (K_{us,2} - K_{us,2,ref}), 0 \right) \right)^2$$

To determine a probability value for complete spin out, parameters from both the tractor unit 12 and at least one trailing unit 14 can be used. The combined probability value for complete spin out, $J_{cso}$, is given by:

$$J_{cso} = W_{11} \cdot \left( (\beta_1 - \beta_{1,ref})^2 + (\beta_2 - \beta_{2,ref})^2 \right) + W_2 \cdot \left( \Sigma_i (S_{x1,k} - \right.$$

$$\left. S_{x1,ref})^2 + \Sigma_i (S_{x2,k} - S_{x2,ref})^2 \right) + W_3 \cdot \left( (\omega_1 - \omega_{1,ref})^2 + (\omega_2 - \omega_{2,ref})^2 \right) + W_4 \cdot$$

$$(\theta_{1,2} - \theta_{1,2,ref})^2 + W_5 \cdot (\dot{\theta}_{1,2} - \dot{\theta}_{1,2,ref})^2 + W_6 \left( \left( \min \left( (K_{us,1} - K_{us,1,ref}), 0 \right) \right)^2 + \right.$$

$$\left. \left( \min \left( (K_{us,2} - K_{us,2,ref}), 0 \right) \right)^2 \right)$$

As discussed above, different weights can be used for different units (or even wheels) for the same parameter, meaning there may be two weights for each parameter. In that case, the combined probability value for complete spin out, $J_{cso}$, is given by:

$$J_{cso} = W_{11} \cdot (\beta_1 - \beta_{1,ref})^2 + W_{12} \cdot (\beta_2 - \beta_{2,ref})^2 + W_{21} \cdot \sum_i (S_{x1,k} - S_{x1,ref})^2 + W_{22}$$

$$\cdot \sum_i (S_{x2,k} - S_{x2,ref})^2 + W_{31} \cdot (\omega_1 - \omega_{1,ref})^2 + W_{32} \cdot (\omega_2 - \omega_{2,ref})^2 + W_4$$

$$\cdot (\theta_{1,2} - \theta_{1,2,ref})^2 + W_5 \cdot (\dot{\theta}_{1,2} - \dot{\theta}_{1,2,ref})^2$$

$$+ W_{61} \left( \min \left( (K_{us,1} - K_{us,1,ref}), 0 \right) \right)^2 + W_{62} \left( \min \left( (K_{us,2} - K_{us,2,ref}), 0 \right) \right)^2$$

It will be appreciated that combinations of common and individual weights for a given parameter may be used. For example, a weight $W_1$ may be used for the sideslip angle, while weights $W_{31}$ and $W_{32}$ are used for the yaw rates of the tractor and trailing units respectively.

In each of the equations above, the probability values given by the differences between current and reference values are squared. This ensures that each probability value has the same sign, and can be summed properly. A square root may also be added. It will be appreciated that the probability values may be provided as a combination of any order. For example, they can be linear, third order, etc., or a combination of orders (e.g., third order for some values, first order for some other values, etc.). The function can be trained to find the best orders for the probability values with a set of real test logs.

The disclosed method allows the advantages of different methods of instability detection to be leveraged. Different parameters can be monitored to detect a yaw instability, which provides a more reliable detection that relying solely on a single parameter. Furthermore, the probability of instability based on the different parameters can be weighted to tailor the method for a particular scenario. For example, if a high accuracy prediction is desired, the probability values based on parameters having a high detection accuracy can be weighed more highly.

The methods explained before can be used with long vehicle combinations having more than two units. The methods can also be used with a single unit vehicle (a passenger car or a rigid truck) to detect a spin out. In a single unit case, some of the terms, such as articulation angle, cannot be used as there is only a single unit.

A tyre model can be used in combination with the methods disclosed above. The tyre model can be that disclosed in the Vehicle Dynamics Compendium from Bengt Jacobson et al, Vehicle Dynamics Group, Division Vehicle and Autonomous Systems, Department of Mechanics and Maritime, Chalmers University of Technology, www.chalmers.se. For example, the tyre model may take into account the cornering stiffness of the tyres of the vehicle combination, which is a value defining tires how much lateral force is created for a certain sideslip angle of the tyre.

FIG. 7 is a block diagram illustrating an exemplary computer system 700 in which embodiments of the present disclosure may be implemented. This example illustrates a computer system 700 such as may be used, in whole, in part, or with various modifications, to provide the functions of the disclosed system. For example, various functions may be controlled by the computer system 700, including, merely by way of example, simulating, determining, classifying, receiving, etc.

The computer system 700 is shown comprising hardware elements that may be electrically coupled via a bus 790. The hardware elements may include one or more central processing units 710, one or more input devices 720 (e.g., a mouse, a keyboard, etc.), and one or more output devices 730 (e.g., a display device, a printer, etc.). The computer system 700 may also include one or more storage devices 740. By way of example, the storage devices 740 may be disk drives, optical storage devices, solid-state storage device such as a random-access memory ("RAM") and/or a read-only memory ("ROM"), which can be programmable, flash-updateable and/or the like.

The computer system 700 may additionally include a computer-readable storage media reader 750, a communications system 760 (e.g., a modem, a network card (wireless or wired), an infrared communication device, Bluetooth™ device, cellular communication device, etc.), and a working memory 780, which may include RAM and ROM devices as described above. In some embodiments, the computer system 700 may also include a processing acceleration unit 770, which can include a digital signal processor, a special-purpose processor and/or the like.

The computer-readable storage media reader 750 can further be connected to a computer-readable storage medium, together (and, optionally, in combination with the storage devices 740) comprehensively representing remote, local, fixed, and/or removable storage devices plus storage media for temporarily and/or more permanently containing computer-readable information. The communications system 760 may permit data to be exchanged with a network, system, computer and/or other component described above.

The computer system 700 may also comprise software elements, shown as being currently located within the working memory 780, including an operating system 788 and/or other code 784. It should be appreciated that alternative embodiments of a computer system 700 may have numerous variations from that described above. For example, customised hardware might also be used and/or particular elements might be implemented in hardware, software (including portable software, such as applets), or both. Furthermore, connection to other computing devices such as network input/output and data acquisition devices may also occur.

Software of the computer system 700 may include code 784 for implementing any or all of the function of the various elements of the architecture as described herein. For example, software, stored on and/or executed by a computer system such as the system 700, can provide the functions of the disclosed system. Methods implementable by software on some of these components have been discussed above in more detail.

## Claims

1. A method for detecting a yaw instability in a vehicle combination comprising a tractor unit and at least one trailing unit, the method comprising:

   determining a plurality of probability values each representing the probability of a yaw instability for the vehicle combination, wherein each probability value is based on a reference value and a current value of a respective parameter of a plurality of parameters;
   applying a respective weight to each probability value; and
   determining a combined probability value representing the probability of a yaw instability occurring in the vehicle combination based on the weighted probability values;
   **characterized in that**
   the plurality of parameters comprises each of a yaw rate of the tractor unit and/or the at least one trailing unit, an articulation angle and/or an articulation angular rate of consecutive units, a longitudinal wheel slip of the tractor unit and/or the at least one trailing unit, a sideslip angle of the tractor unit and/or the at least one trailing unit, and an understeering gradient of the tractor unit and/or the at least one trailing unit.

2. The method of claim 1, wherein each probability value is determined based on a difference between the reference value and the current value.

3. The method of any preceding claim, wherein the reference value, $\omega_{1,ref}$, for the yaw rate of the tractor unit is a modelled value, $\omega_{1,model}$, given by:

$$\omega_{1,model} = \frac{v_{1r} \tan \delta_1}{L_1}$$

where $v_{1r}$ is the longitudinal speed of the tractor unit, $\delta_1$ is the road wheel angle of the tractor unit, and $L_1$ is the wheelbase of the tractor unit.

4. The method of any preceding claim, wherein the reference value, $\omega_{2,ref}$, for the yaw rate of a first trailing unit is a modelled value, $\omega_{2,model}$, given by:

$$\omega_{2,model} = \frac{v_{1r}}{L_2}\left(\sin \theta_{1,2} + \cos \theta_{1,2} \cdot \frac{b_1 \cdot \tan \delta_1}{L_1}\right)$$

where $v_{1r}$ is the longitudinal speed of the tractor unit, $L_2$ is the wheelbase of the trailing unit, $\theta_{1,2}$ is the an articulation angle between the tractor unit and a first trailing unit, $b_1$ is the distance from the rear axle of the tractor unit to a coupling point of the vehicle combination, $\delta_1$ is the road wheel angle of the tractor unit, and $L_1$ is the wheelbase of the tractor unit.

5. The method of any preceding claim, wherein the reference value for the yaw rate of trailing units $i>2$, $\omega_{i,model}$, can be given by:

$$\omega_i = \frac{v_{ir} \cdot \tan\left(\theta_{i-1,i} + \beta_{i-1,c}\right)}{L_i}$$

where $v_{ir}$ is the longitudinal speed of unit $i$, $\theta_{i-1,i}$ is the an articulation angle between units $i$-1 and $i$, $\beta_{i-1,c}$ is the sideslip angle for unit $i$-1 at the coupling point, and $L_i$ is the wheelbase of the unit i.

6. The method of any preceding claim, wherein the reference value, $\theta_{1,2,ref}$, for the articulation angle between a tractor unit and a first trailing unit is a modelled value, $\theta_{1,2,ss,model}$, given by:

$$\theta_{1,2,ss,model} = \frac{L_2}{L_1}\left(1 - \frac{b_1}{L_2}\right) \tan \delta_1$$

where $L_2$ is the wheelbase of the trailing unit, $L_1$ is the wheelbase of the tractor unit, $b_1$ is the distance from the rear axle of the tractor unit to a coupling point of the vehicle combination, and $\delta_1$ is the road wheel angle of the tractor unit.

7. The method of any preceding claim, wherein the reference value, $\dot{\theta}_{1,2,ref}$, for the articulation angular rate between a tractor unit and a first trailing unit is a modelled value, $\theta_{1,2,model}$, given by:

$$\dot{\theta}_{1,2,model} = -\frac{v_{1r}}{L_2} \sin \theta_{1,2} + \frac{v_{1r}}{L_1}\left(1 - \frac{b_1}{L_2} \cos \theta_{1,2}\right) \tan \delta_1$$

where $v_{1r}$ is the longitudinal speed of the tractor unit, $L_2$ is the wheelbase of the trailing unit, $\theta_{1,2}$ is the articulation angle between the tractor unit and a first trailing unit, $L_1$ is the wheelbase of the tractor unit, $b_1$ is the distance from the rear axle of the tractor unit to a coupling point of the vehicle combination, and $\delta_1$ is the road wheel angle of the tractor unit.

8. The method of any preceding claim, wherein the reference value for the articulation angular rate between consecutive trailing units $i$, $i$+1, $\dot{\theta}_{i,i+1,model}$, can be given by:

$$\dot{\theta}_{i,i+1,model} = \omega_i - \omega_{i+1}$$

where $\omega_i$ is the yaw rate of unit $i$.

9. The method of any preceding claim, wherein the reference value, $S_{xi,ref}$, for the longitudinal slip of a wheel of a unit, i, is a fixed threshold determined based on the slip ratio of the wheel at a maximum tyre force or a variable threshold determined based on the inverse of a current value of a lateral acceleration of the tractor unit, a road wheel angle of the tractor unit, a road wheel angle of a trailing unit, and/or an articulation angle of consecutive units.

10. The method of any preceding claim, wherein the reference value, $\beta_{1,ref}$ for the sideslip angle for a given unit is a steady state value of the sideslip angle, preferably determined before braking.

11. The method of any preceding claim, wherein the reference value, $K_{us,i,ref}$, for the understeering gradient of a unit, $i$, is a fixed threshold determined based on experimental data and/or a machine learning model or a variable threshold determined based on a current operating state of the vehicle combination.

12. The method of any preceding claim, wherein the weights are determined based on at least one of:

   a certainty of the respective probability value;
   the horizon of detection associated with the probability value;
   a vehicle parameter such as lateral acceleration, a static load distribution of the vehicle combination, and a longitudinal wheel slip of the tractor unit and/or the at least one trailing unit;
   an environmental parameter such as road friction, road camber, and road slope; and
   a machine learning model or experimental data.

13. The method of any preceding claim, wherein the combined probability value, J, for a yaw instability of a unit, i, is given by:

$$J = W_1 \cdot \left(\beta_i - \beta_{i,ref}\right)^2 + W_2 \cdot \sum_i \left(S_{xi,k} - S_{xi,ref}\right)^2 + W_3 \cdot \left(\omega_i - \omega_{i,ref}\right)^2 +$$

$$W_4 \cdot \left(\theta_{i,i+1} - \theta_{i,i+1,ref}\right)^2 + W_5 \cdot \left(\dot{\theta}_{i,i+1} - \dot{\theta}_{i,i+1,ref}\right)^2$$

$$+ W_6 \left(\min\left(\left(K_{us,i} - K_{us,i,ref}\right), 0\right)\right)^2$$

where:

   $W_j$ is the weight for the parameter model $j$,
   $\omega_i$ is a current value of the yaw rate of the unit,
   $\theta_{i,i+1}$ is a current value of the articulation angle of consecutive units,
   $\dot{\theta}_{i,i+1}$ is a current value of the articulation angular rate of consecutive units,
   $\beta_i$ is a current value of the sideslip angle for the unit,
   $S_{xi,k}$ is a current value of the longitudinal slip for the wheel k of the unit, and
   $K_{us,i}$ is a current value is the understeering gradient for the unit.

14. The method of any preceding claim, comprising one or more of determining a probability value for jack-knifing based on a plurality of parameters from the tractor unit and determining a probability value for trailer swing based on a plurality of parameters from a trailing unit.

15. A computer-readable medium having stored thereon instructions that, when executed by one or more processors cause execution of the method steps according to any preceding claim.

**Patentansprüche**

1. Verfahren zum Erkennen einer Gierinstabilität in einer Fahrzeugkombination, umfassend eine Zugeinheit und mindestens eine Anhängereinheit, das Verfahren umfassend:

   Bestimmen einer Vielzahl von Wahrscheinlichkeitswerten, die jeweils die Wahrscheinlichkeit einer Gierinstabilität für die Fahrzeugkombination darstellen, wobei jeder Wahrscheinlichkeitswert auf einem Referenzwert und einem aktuellen Wert eines jeweiligen Parameters einer Vielzahl von Parametern basiert;
   Anwenden einer jeweiligen Gewichtung auf jeden Wahrscheinlichkeitswert; und
   Bestimmen eines kombinierten Wahrscheinlichkeitswerts, der die Wahrscheinlichkeit eines Auftretens einer Gierinstabilität in der Fahrzeugkombination basierend auf den gewichteten Wahrscheinlichkeitswerten darstellt;

   **dadurch gekennzeichnet, dass**
   die Vielzahl von Parametern jedes von einer Gierrate der Zugeinheit und/oder der mindestens einen Anhängereinheit, einem Knickwinkel und/oder einer Knickwinkelrate aufeinanderfolgender Einheiten, einem Radlängsschlupf der Zugeinheit und/oder der mindestens einen Anhängereinheit, einem Schlupfwinkel der Zugeinheit und/oder der mindestens einen Anhängereinheit und einen Untersteuerungsgradienten der Zugeinheit und/oder der mindestens einen Anhängereinheit umfasst.

2. Verfahren nach Anspruch 1, wobei jeder Wahrscheinlichkeitswert basierend auf einer Differenz zwischen dem Referenzwert und dem aktuellen Wert bestimmt wird.

3. Verfahren nach einem der vorherigen Ansprüche, wobei der Referenzwert $\omega_{1,ref}$ für die Giergeschwindigkeit der Zugeinheit ein modellierter Wert, $\omega_{1,model}$ **ist,** der gegeben ist durch:

$$\omega_{1,model} = \frac{v_{1r} \tan \delta_1}{L_1}$$

wobei $v_{1r}$ die Längsgeschwindigkeit der Zugeinheit ist, $\delta_1$ der Laufradwinkel der Zugeinheit ist und $L_1$ der Radstand der Zugeinheit ist.

4. Verfahren nach einem der vorherigen Ansprüche, wobei der Referenzwert, $\omega_{2,ref}$, für die Gierrate einer ersten Anhängereinheit ein modellierter Wert, $\omega_{2,model}$, ist, der gegeben ist durch:

$$\omega_{2,model} = \frac{v_{1r}}{L_2} \left( \sin \theta_{1,2} + \cos \theta_{1,2} \cdot \frac{b_1 \cdot \tan \delta_1}{L1} \right)$$

wobei $v_{1r}$ die Längsgeschwindigkeit der Zugeinheit ist, $L_2$ der Radstand der Anhängereinheit ist, $\theta_{1,2}$ der Anlenkungswinkel zwischen der Zugeinheit und einer ersten Anhängereinheit ist, $b_1$ der Abstand zwischen der Hinterachse der Zugeinheit und einem Kupplungspunkt der Fahrzeugkombination ist, $\delta_1$ der Laufradwinkel der Zugeinheit ist und $L_1$ der Radstand der Zugeinheit ist.

5. Verfahren nach einem der vorherigen Ansprüche, wobei der Referenzwert für die Gierrate der Anhängereinheiten *i>2*, $\omega_{1,model}$, gegeben sein kann durch:

$$\omega_i = \frac{v_{ir} \cdot \tan(\theta_{i-1,i} + \beta_{i-1,c})}{L_i}$$

wobei $v_{ir}$ die Längsgeschwindigkeit der Einheit *i ist*, $\theta_{i-1,i}$ der Gelenkwinkel zwischen den Einheiten *i-1* und i ist, $\beta_{i-1,c}$ der Schlupfwinkel für die Einheit *i-1* an dem Kupplungspunkt ist und $L_i$ der Radstand der Einheit *i* ist.

6. Verfahren nach einem der vorherigen Ansprüche, wobei der Referenzwert $\theta_{1,2,ref}$ für den Knickwinkel zwischen einer Zugeinheit und einer ersten Anhängereinheit ein modellierter Wert $\theta_{1,2,ss,model}$ ist, der gegeben ist durch:

$$\theta_{1,2,ss,model} = \frac{L_2}{L_1}\left(1 - \frac{b_1}{L_2}\right)\tan\delta_1$$

wobei $L_2$ der Radstand der Zugeinheit ist, $L_1$ der Radstand der Zugeinheit ist, $b_1$ der Abstand zwischen der Hinterachse der Zugeinheit und einem Kupplungspunkt der Fahrzeugkombination ist und $\delta_1$ der Laufradwinkel der Zugeinheit ist.

7. Verfahren nach einem der vorherigen Ansprüche, wobei der Referenzwert $\dot{\theta}_{1,2,ref}$ für die Gelenkwinkelrate zwischen einer Zugeinheit und einer ersten Anhängereinheit ein modellierter Wert $\dot{\theta}_{1,2,model}$ ist, der gegeben ist durch:

$$\dot{\theta}_{1,2,model} = -\frac{v_{1r}}{L_2}\sin\theta_{1,2} + \frac{v_{1r}}{L_1}\left(1 - \frac{b_1}{L_2}\cos\theta_{1,2}\right)\tan\delta_1$$

wobei $v_{1r}$ die Längsgeschwindigkeit der Zugeinheit ist, $L_2$ der Radstand der Anhängereinheit ist, $\theta_{1,2}$ der Gelenk-winkel zwischen der Zugeinheit und einer ersten Anhängereinheit ist, $L_1$ der Radstand der Zugeinheit ist, $b_1$ der Abstand von der Hinterachse der Zugeinheit zu einem Kupplungspunkt der Fahrzeugkombination ist und $\delta_1$ der Laufradwinkel der Zugeinheit ist.

8. Verfahren nach einem der vorherigen Ansprüche, wobei der Referenzwert für die Gelenkwinkelrate zwischen aufeinanderfolgenden hinteren Einheiten $i, i+1, \dot{\theta}_{i+1,model}$ gegeben sein kann durch:

$$\dot{\theta}_{i,i+1,model} = \omega_i - \omega_{i+1}$$

wobei $\omega_i$ die Gierrate der Einheit $i$ ist.

9. Verfahren nach einem der vorherigen Ansprüche, wobei der Referenzwert $S_{xi,ref}$ für den Längsschlupf eines Rads einer Einheit $i$ ein fester Schwellenwert ist, der basierend auf dem Schlupfverhältnis des Rads bei einer maximalen Reifenkraft bestimmt wird, oder ein variabler Schwellenwert, der basierend auf dem Kehrwert eines aktuellen Werts einer Querbeschleunigung der Zugeinheit, eines Laufradwinkels der Zugeinheit, eines Laufradwinkels einer Anhängereinheit und/oder eines Knickwinkels von aufeinanderfolgenden Einheiten bestimmt wird.

10. Verfahren nach einem der vorherigen Ansprüche, wobei der Referenzwert $\beta_{1,ref}$ für den Schlupfwinkel für eine bestimmte Einheit ein stationärer Wert des Schlupfwinkels ist, der vorzugsweise vor Bremsen bestimmt wird.

11. Verfahren nach einem der vorherigen Ansprüche, wobei der Referenzwert $K_{us,i,ref}$ für den Untersteuerungsgradienten einer Einheit $i$ ein fester Schwellenwert ist, der basierend auf experimentellen Daten und/oder einem Modell maschinellen Lernens bestimmt wird, oder ein variabler Schwellenwert, der basierend auf einem aktuellen Betriebszustand der Fahrzeugkombination bestimmt wird.

12. Verfahren nach einem der vorherigen Ansprüche, wobei die Gewichtungen basierend auf mindestens einem von Folgenden bestimmt werden:

    einer Gewissheit über den jeweiligen Wahrscheinlichkeitswert;
    dem mit dem Wahrscheinlichkeitswert assoziierten Entdeckungshorizont;
    einem Fahrzeugparameter, wie beispielsweise Querbeschleunigung, einer statischen Lastverteilung der Fahrzeugkombination und einem Radschlupf in Längsrichtung der Zugeinheit und/oder der mindestens einen Anhängereinheit;
    einem Umgebungsparameter, wie beispielsweise Straßenreibung, Straßensturz und Straßenneigung; und
    einem Modell maschinellen Lernens oder experimentellen Daten.

13. Verfahren nach einem der vorherigen Ansprüche, wobei der kombinierte Wahrscheinlichkeitswert J für eine Gierinstabilität einer Einheit $i$ gegeben ist durch:

$$J = W_1 \cdot \left(\beta_i - \beta_{i,ref}\right)^2 + W_2 \cdot \sum_i \left(S_{xi,k} - S_{xi,ref}\right)^2 + W_3 \cdot \left(\omega_i - \omega_{i,ref}\right)^2 +$$

$$W_4 \cdot \left(\theta_{i,i+1} - \theta_{i,i+1,ref}\right)^2 + W_5 \cdot \left(\dot{\theta}_{i,i+1} - \dot{\theta}_{i,i+1,ref}\right)^2$$

$$+ W_6 \left(\min\left(\left(K_{us,i} - K_{us,i,ref}\right), 0\right)\right)^2$$

wobei:

$W_j$ das Gewicht für den Parameter Modell j ist,
$\omega_i$ ein aktueller Wert für die Giergeschwindigkeit der Einheit ist,
$\theta_{i,i+1}$ ein aktueller Wert des Gelenkwinkels von aufeinanderfolgenden Einheiten ist,
$\dot{\theta}_{i,i+1}$ ein aktueller Wert der Gelenkwinkelrate von aufeinanderfolgenden Einheiten ist,
$\beta_i$ ein aktueller Wert des Schwimmwinkels für die Einheit ist, $S_{xi,k}$ ein aktueller Wert des Längsschlupfs für das Rad $k$ der Einheit ist, und
$K_{us,i}$ ein aktueller Wert ist, der den Untersteuerungsgradienten für die Einheit angibt.

14. Verfahren nach einem der vorherigen Ansprüche, umfassend eines oder mehrere von Bestimmen eines Wahrscheinlichkeitswerts für ein eine Knickbewegung basierend auf einer Vielzahl von Parametern von der Zugeinheit und Bestimmen eines Wahrscheinlichkeitswerts für ein Anhängerpendeln basierend auf einer Vielzahl von Parametern von einer Anhängereinheit.

15. Computerlesbares Medium, auf dem Anweisungen gespeichert sind, die, wenn sie von einem oder mehreren Prozessoren ausgeführt werden, ein Ausführen der Verfahrensschritte nach einem vorherigen Anspruch bewirken.

**Revendications**

1. Procédé de détection d'une instabilité de lacet dans une combinaison de véhicules comprenant un tracteur routier et au moins une unité remorquée, le procédé comprenant :

la détermination d'une pluralité de valeurs de probabilité, chacune représentant la probabilité d'une instabilité de lacet pour la combinaison de véhicules, et dans lequel chaque valeur de probabilité est fondée sur une valeur de référence et une valeur actuelle d'un paramètre respectif d'une pluralité de paramètres ;
l'application d'un poids respectif à chaque valeur de probabilité ; et
la détermination d'une valeur de probabilité combinée représentant la probabilité qu'une instabilité de lacet se produise dans la combinaison de véhicules sur la base des valeurs de probabilité pondérées ;

**caractérisé en ce que**
la pluralité de paramètres comprend chacun d'une vitesse de lacet du tracteur routier et/ou de l'au moins une unité remorquée, d'un angle d'articulation et/ou d'une vitesse angulaire d'articulation d'unités consécutives, d'un patinage de roue longitudinal du tracteur routier et/ou de l'au moins une unité remorquée, d'un angle de dérapage du tracteur routier et/ou de l'au moins une unité remorquée, et d'un gradient de sous-virage du tracteur routier et/ou de l'au moins une unité remorquée.

2. Procédé selon la revendication 1, dans lequel chaque probabilité est déterminée sur la base d'une différence entre la valeur de référence et la valeur actuelle.

3. Procédé selon l'une quelconque des revendications précédentes, dans lequel la valeur de référence, $\omega_{1,ref}$, pour la vitesse de lacet du tracteur routier est une valeur modélisée, $\omega_{1,model}$, donnée par :

$$\omega_{1,model} = \frac{v_{1r} \tan \delta_1}{L_1}$$

où $v_{1r}$ est la vitesse longitudinale du tracteur routier, $\delta_1$ est l'angle des roues du tracteur routier et $L_1$ est l'empattement

du tracteur routier.

4. Procédé selon l'une quelconque des revendications précédentes, dans lequel la valeur de référence, $\omega_{2,ref}$, pour la vitesse de lacet d'une première unité remorquée est une valeur modélisée, $\omega_{2,model}$, donnée par :

$$\omega_{2,model} = \frac{v_{1r}}{L_2}\left(\sin\theta_{1,2} + \cos\theta_{1,2}\cdot\frac{b_1\cdot\tan\delta_1}{L1}\right)$$

où $v_{1r}$ est la vitesse longitudinale du tracteur routier, $L_2$ est l'empattement de l'unité remorquée, $\theta_{1,2}$ est l'angle d'articulation entre le tracteur routier et une première unité remorquée, $b_1$ est la distance entre l'essieu arrière du tracteur routier et un point d'attelage de la combinaison de véhicules, $\delta_1$ est l'angle des roues du tracteur routier, et $L_{\pm}$ est l'empattement du tracteur routier.

5. Procédé selon l'une quelconque des revendications précédentes, dans lequel la valeur de référence pour la vitesse de lacet des unités remorquées *i>2, $\omega_{1,model}$*, peut être donnée par :

$$\omega_i = \frac{v_{ir}\cdot\tan(\theta_{i-1,i} + \beta_{i-1,c})}{L_i}$$

où $v_{ir}$ est la vitesse longitudinale de l'unité *i*, $\theta_{i-1,i}$ est l'angle d'articulation entre les unités *i-1* et *i*, $\beta_{i-1,c}$ est l'angle de dérapage de l'unité *i-1* au point d'attelage, et $L_i$ est l'empattement de l'unité *i*.

6. Procédé selon l'une quelconque des revendications précédentes, dans lequel la valeur de référence, $\theta_{1,2,ref}$, pour l'angle d'articulation entre un tracteur routier et une première unité remorquée est une valeur modélisée, $\theta_{1,2,ss,model}$, donnée par :

$$\theta_{1,2,ss,model} = \frac{L_2}{L_1}\left(1 - \frac{b_1}{L_2}\right)\tan\delta_1$$

où $L_2$ est l'empattement de l'unité remorquée, $L_1$ est l'empattement du tracteur routier, $b_1$ est la distance entre l'essieu arrière du tracteur routier et un point d'attelage de la combinaison de véhicules, et $\delta_1$ est l'angle des roues de la roue du tracteur routier.

7. Procédé selon l'une quelconque des revendications précédentes, dans lequel la valeur de référence, $\dot{\theta}_{1,2,ref}$, pour la vitesse angulaire d'articulation entre un tracteur routier et une première unité remorquée est une valeur modélisée, $\dot{\theta}_{1,2,model}$, donnée par :

$$\dot{\theta}_{1,2,model} = -\frac{v_{1r}}{L_2}\sin\theta_{1,2} + \frac{v_{1r}}{L_1}\left(1 - \frac{b_1}{L_2}\cos\theta_{1,2}\right)\tan\delta_1$$

où $v_{1r}$ est la vitesse longitudinale du tracteur routier, $L_2$ est l'empattement de l'unité remorquée, $\theta_{1,2}$ est l'angle d'articulation entre le tracteur routier et une première unité remorquée, $L_1$ est l'empattement du tracteur routier, $b_1$ est la distance entre l'essieu arrière du tracteur routier et un point d'attelage de la combinaison de véhicules, et $\delta_1$ est l'angle des roues du tracteur routier.

8. Procédé selon l'une quelconque des revendications précédentes, dans lequel la valeur de référence pour la vitesse angulaire d'articulation entre les unités remorquées consécutives *i, i+1, $\dot{\theta}_{i,i+1,model}$*, peut être donnée par :

$$\dot{\theta}_{i,i+1,model} = \omega_i - \omega_{i+1}$$

où $\omega_i$, est la vitesse de lacet de l'unité *i*.

9. Procédé selon l'une quelconque des revendications précédentes, dans lequel la valeur de référence, $S_{xi,ref}$, pour le patinage longitudinal d'une roue d'une unité, *i,* est un seuil fixe déterminé sur la base du taux de patinage de la roue à une force de pneu maximale ou un seuil variable déterminé sur la base de l'inverse d'une valeur actuelle d'une accélération latérale du tracteur routier, d'un angle de roue de route du tracteur routier, d'un angle de roue de route d'une unité remorquée, et/ou d'un angle d'articulation d'unités consécutives.

**10.** Procédé selon l'une quelconque des revendications précédentes, dans lequel la valeur de référence, $\beta_{1,ref}$ pour l'angle de dérapage d'une unité donnée est une valeur d'état stable de l'angle de dérapage, de préférence déterminée avant le freinage.

**11.** Procédé selon l'une quelconque des revendications précédentes, dans lequel la valeur de référence, $K_{us,i,ref}$, pour le gradient de sous-virage d'une unité, *i,* est un seuil fixe déterminé sur la base de données expérimentales et/ou d'un modèle d'apprentissage automatique ou un seuil variable déterminé sur la base d'un état de fonctionnement actuel de la combinaison de véhicules.

**12.** Procédé selon l'une quelconque des revendications précédentes, dans lequel les poids sont déterminés sur la base d'au moins l'un des éléments suivants :

une certitude de la valeur de probabilité respective ;
l'horizon de détection associé à la valeur de probabilité ;
un paramètre de véhicule tel que l'accélération latérale, une répartition statique de la charge de la combinaison de véhicules, et un patinage de roue longitudinal du tracteur routier et/ou de l'au moins une unité remorquée ;
un paramètre environnemental tel que le frottement de la route, le dévers de la route et la pente de la route ; et
un modèle d'apprentissage automatique ou des données expérimentales.

**13.** Procédé selon l'une quelconque des revendications précédentes, dans lequel la valeur de probabilité combinée, J, pour une instabilité de lacet d'une unité, i, est donnée par :

$$J = W_1 \cdot \left(\beta_i - \beta_{i,ref}\right)^2 + W_2 \cdot \sum_i \left(S_{xi,k} - S_{xi,ref}\right)^2 + W_3 \cdot \left(\omega_i - \omega_{i,ref}\right)^2 +$$

$$W_4 \cdot \left(\theta_{i,i+1} - \theta_{i,i+1,ref}\right)^2 + W_5 \cdot \left(\dot{\theta}_{i,i+1} - \dot{\theta}_{i,i+1,ref}\right)^2$$

$$+ W_6 \left(\min\left(\left(K_{us,i} - K_{us,i,ref}\right), 0\right)\right)^2$$

où :

$W_j$ est le poids pour le modèle de paramètre j,
$\omega_i$ est une valeur actuelle de la vitesse de lacet de l'unité,
$\theta_{i,i+1}$ est une valeur actuelle de l'angle d'articulation des unités consécutives,
$\dot{\theta}_{i,i+1}$ est une valeur actuelle de la vitesse angulaire d'articulation des unités consécutives,
$\beta_i$ est une valeur actuelle de l'angle de dérapage pour l'unité,
$S_{xi,k}$ est une valeur actuelle du dérapage longitudinal de la roue *k* de l'unité, et
$K_{us,i}$ est une valeur actuelle qui représente le gradient de sous-virage pour l'unité.

**14.** Procédé selon l'une quelconque des revendications précédentes, comprenant une ou plusieurs opérations parmi la détermination d'une valeur de probabilité de mise en portefeuille sur la base d'une pluralité de paramètres provenant du tracteur routier et la détermination d'une valeur de probabilité de louvoiement de la remorque sur la base d'une pluralité de paramètres provenant d'une unité remorquée.

**15.** Support lisible par ordinateur sur lequel sont stockées des instructions qui, lorsqu'elles sont exécutées par un ou plusieurs processeurs, entraînent l'exécution des étapes de procédé selon l'une quelconque des revendications précédentes.

FIG. 1

FIG. 2A

FIG. 2B

FIG. 3

**FIG. 4A**

**FIG. 4B**

**FIG. 5A**

**FIG. 5B**

**FIG. 5C**

**FIG. 5D**

**FIG. 5E**

**FIG. 5F**

**FIG. 5G**

**FIG. 5H**

**FIG. 5I**

**FIG. 5J**

100

| Determining a plurality of probability values each representing the probability of a yaw instability for a vehicle combination | 102 |

↓

| Applying a respective weight to each probability value | 104 |

↓

| Determining a combined probability value representing the probability of a yaw instability being present in the vehicle combination | 106 |

**FIG. 6**

710 — CPU(S)
720 — Input Device(s)
730 — Output Device(s)
740 — Storage Device(s)
750 — Computer Readable Storage Media Reader

Communication Systems — 760
Processing Acceleration — 770
Working Memory — 790
Operating System — 788
Other Code (Programs) — 780
784
700

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2022069950 W
- EP 2022069957 W
- EP 2022069954 W
- EP 2022069951 W

**Non-patent literature cited in the description**

- **M. ZANCHETTA et al.** On the Feedback Control of Hitch Angle through Torque-Vectoring. *IEEE 15th International Workshop on Advanced Motion Control*, 09 March 2018, 535-540

- Vehicle Dynamics Group, Division Vehicle and Autonomous Systems, Department of Mechanics and Maritime. **BENGT JACOBSON et al.** Vehicle Dynamics Compendium from. Chalmers University of Technology